# EUROPEAN PATENT SPECIFICATION

(11) **EP 1 920 313 B1**
(45) Date of publication and mention of the grant of the patent: **18.06.2014**
(21) Application number: 06802744.0
(22) Date of filing: 30.08.2006
(51) Int. Cl.: G06F 3/0485, G06F 3/0482, G06F 3/0489, G06F 3/0362

(54) **MANAGEMENT OF FILES IN A PERSONAL COMMUNICATION DEVICE**
VERWALTUNG VON DATEIEN IN EINER PERSÖNLICHEN KOMMUNIKATIONSEINRICHTUNG
GESTION DE FICHIERS DANS UN DISPOSITIF DE COMMUNICATION PERSONNEL

(30) Priority: 02.09.2005 US 714537 P
(43) Date of publication of application: 14.05.2008
(60) Divisional application: 14168360.7
(73) Proprietor: APPLE INC., Cupertino, CA 95014 (US)
(72) Inventor: WYSOCKI, Chris, Los Gatos, California 95030 (US); WASKO, Timothy, High River, Alberta T1V 1S3 (CA); ROBBIN, Jeffrey, L., Los Altos, CA 94024 (US); JOBS, Steve, Palo Alto, California 94301 (US); CHAUDRI, Imran, San Francisco, CA 94118 (US); CHRISTIE, Greg, San Jose, California 95129 (US)
(74) Representative: Gillard, Matthew Paul
(86) International application number: PCT/US2006/034111
(87) International publication number: WO 2007/027949

(56) References cited:
- EP-A- 1 548 740
- WO-A-02/25935
- WO-A-2004/004338
- WO-A1-00/63766
- US-A1- 2003 076 301
- US-A1- 2004 078 416
- US-B1- 6 248 946
- ETCHISON: "Accelerated Discrete Adjustment of the Parameters of a Process. October 1972" IBM TECHNICAL DISCLOSURE BULLETIN, IBM CORP. NEW YORK, US, vol. 15, no. 5, 1 October 1972 (1972-10-01), pages 1691-1692, XP002192017 ISSN: 0018-8689

## Description

This invention relates generally to portable communication devices both wired and wireless in nature. More specifically, the invention describes a graphical user interface for use in a portable wireless communication device suitable for assisting a user in retrieving and accessing files stored therein.

Recent developments in consumer electronics have included the introduction of portable communication devices such as cell phones, Personal Digital Assistants (PDAs), MP3 players, minidisk players, and the like. For example, in the case of an MP3 player, a number of digitized audio files in the form of MP3 files are stored in a storage medium included in the MP3 player. In the case of MP3 files, for example, a user of the MP3 player must be able to peruse and select a particular file, or files, based upon such characteristics as music genre, author, album, or whatever grouping of MP3 files is present in the MP3 player. In other examples, cell phones and PDAs have been upgraded to include both still picture and video capture functions as well as acting as a repository of personal information (such as phone numbers, addresses) which require new and more efficient methods of locating and retrieving sought out information and/or files.

EP-1548740 discloses a method of selecting musical tracks. Available digital works are selected based upon user preference information. At least two different sequences of digital works to be performed are generated including the selected digital works. The different sequences are based upon different aspects of the preference information Selecting the digital works comprises the user navigating a selected artists screen by pressing buttons to navigate to chosen items.

US-2004/078416 discloses a data input apparatus and method for selecting and amending numerical values to control a scanner/printer.

What is required is a user interface that provides for a user friendly and efficient retrieval of stored data in a portable communication device such as a cell phone, multimedia player, and the like.

The invention described herein pertains to a user interface that provides for a user friendly and efficient retrieval of stored multimedia asset files.

In one aspect the invention comprises a method of assisting a user interacting with a portable wireless communication device, comprising: providing a user interface for the portable wireless communication device, the user interface including a plurality of linked display screens and a plurality of physical keys; displaying one of the linked display screens as a current display screen; receiving a key press corresponding to a selected physical key; and displaying a resulting action on a next display screen; and determining a duration of time of the pressing of the selected physical key, and, if the duration of time is greater than a predetermined amount of time, then applying an acceleration adjustment to the resulting action based on the duration of time; wherein the resulting action includes displaying a position indicator that is adjusted with the acceleration adjustment to move the position indicator at a greater rate; and wherein the rate of acceleration is automatically decreased when the position indicator approaches an end of a track or a beginning of a track.

In a second aspect the invention comprises a cell phone comprising: a display screen arranged to display a plurality of selectable items; a plurality of physical keys; a processor for carrying out computer program code; and a memory device for storing computer program code, the computer program code including at least: computer program code for displaying the selectable items on the display screen; computer program code for receiving a key press corresponding to a selected physical key; computer program code for determining a duration of time of the pressing of the selected physical key; computer program code for displaying a resulting action on the display screen based upon the received key press; computer program code for applying an acceleration adjustment to the resulting action based on the duration of time if the duration of time is greater than a predetermined amount of time; wherein the resulting action includes displaying a position indicator that is adjusted with the acceleration adjustment to move the position indicator at a greater rate; and computer program code for decreasing the rate of acceleration when the position indicator approaches an end of a track or a beginning of a track.

These and other features of the present invention will be described in more detail below in the detailed description of the invention and in conjunction with the following figures.

The invention will be better understood by reference to the following description taken in conjunction with the accompanying drawings.
Fig. 1 shows an exemplary portable multimedia device.
Fig. 2 illustrates a hierarchically ordered menu corresponding to stored media assets.
Fig. 3 shows a flowchart illustrating a particular process for selecting a particular one of a group of stored media assets.
Fig. 4 shows a state diagram ofa user interface suitable for providing user provided input for an exemplary MP3 player (along the lines of the player shown in Fig. 1).
Figs. 5A - 5E illustrate various exemplary user interfaces consistent with selection and play of a media asset.
Fig. 6 is a cell phone as an exemplary wireless communication device.
Figs. 7 and 8 is a flow diagram of synchronization processing.
Figs. 9A - 9C show a main menu screen each being associated with a particular operational state (i.e., stopped in Fig. 9A, playing in Fig. 9B, or stopped in Fig. 9C) of the personal communication device.
Fig. 10 shows a particular example of a playlists screen.
Fig. 11 shows a particular example of a playlist screen.
Fig. 12 shows a particular example of an artists screen.
Fig. 13 shows a particular example of an albums screen.
Fig. 14 shows a particular example of a songs screen.
Figs. 15 - 20 shows a particular example of a now playing screen.
Fig. 21 shows a contextual menu.
Fig. 22 shows an about screen.
Fig. 23 shows a legal screen.
Figs. 24 and 5 shows a delete menu screen.
Fig. 26 shows a delete albums screen.
Fig. 27 shows a delete songs screen.
Fig. 28 illustrates a flowchart detailing a process describing an accelerated resulting action.

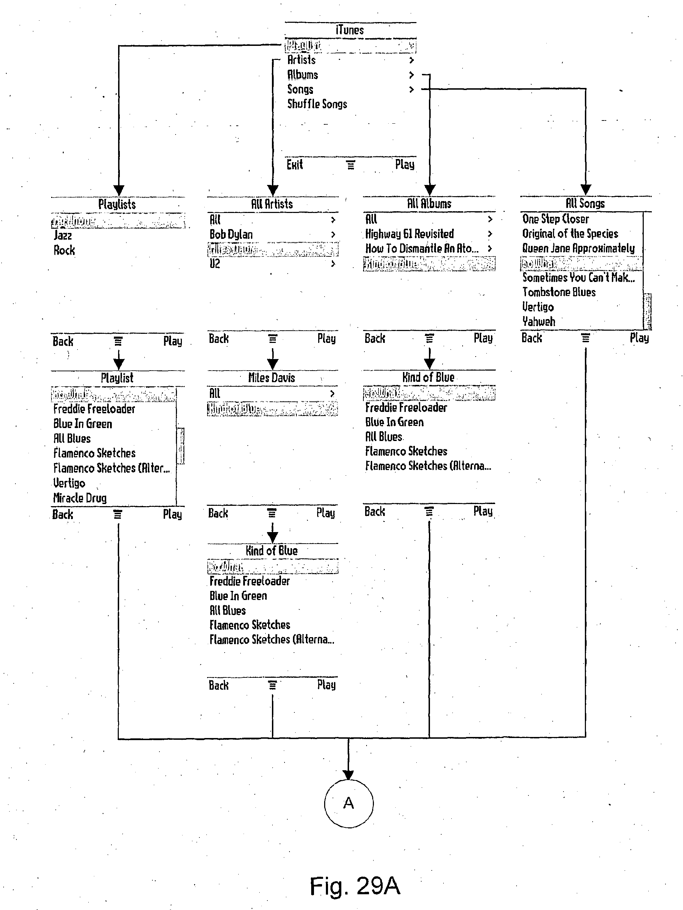

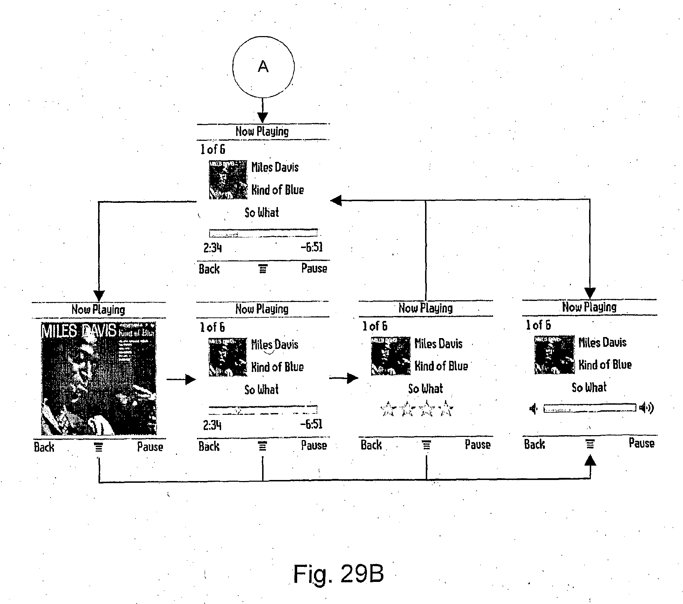

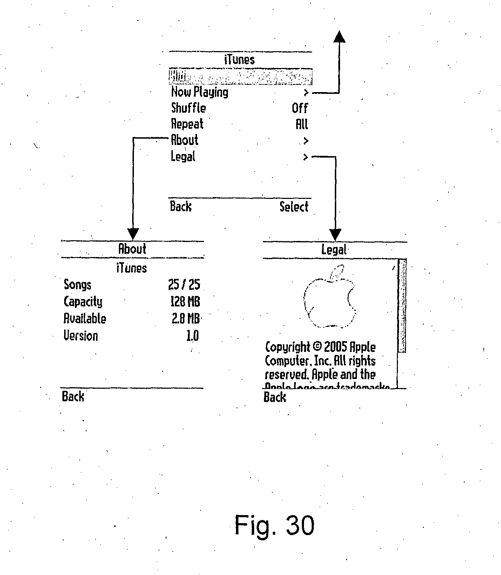

Figs. 29A, B - 30 shows exemplary screen flows.
Figs. 31 - 63 show operational tables for each of the above described menu screens for list items, soft keys, and hard keys.

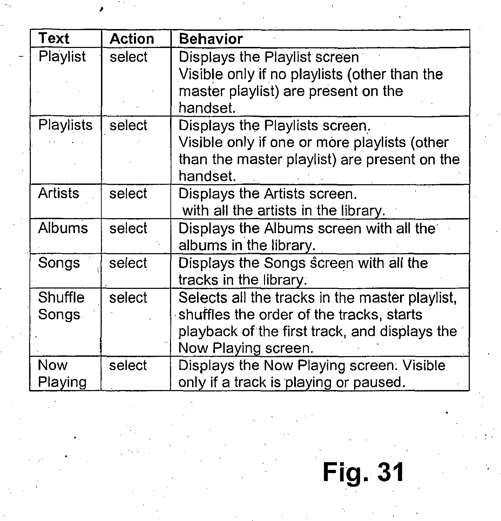

Fig. 31 is a list item operational table for the main menu screen.

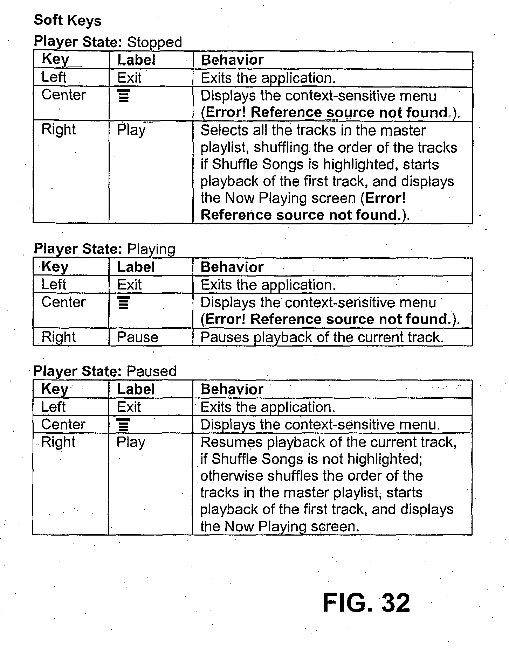

Fig. 32 is a soft key operational table for the main menu screen.

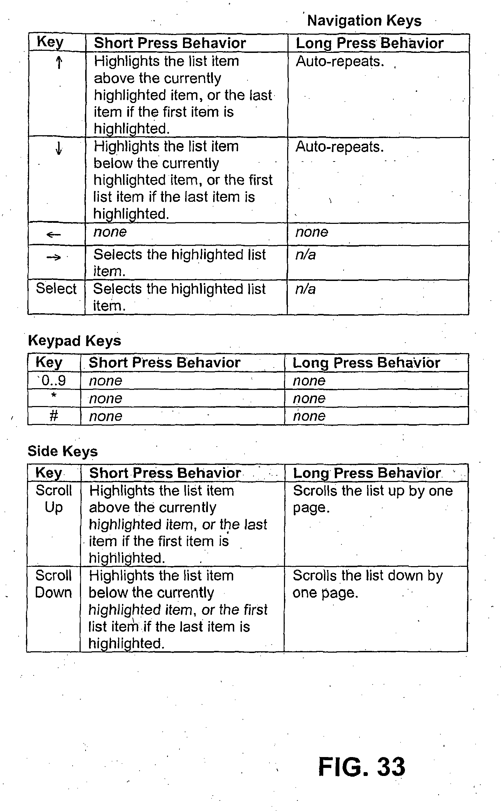

Fig. 33 is a hard key operational table for the main menu screen.

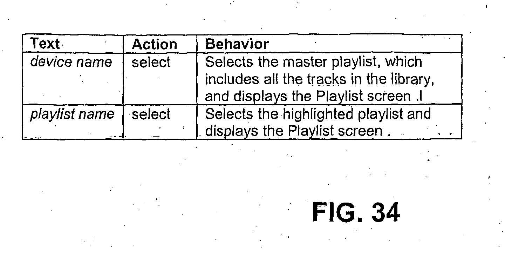

Fig. 34 is a list item operational table for the playlist screen.

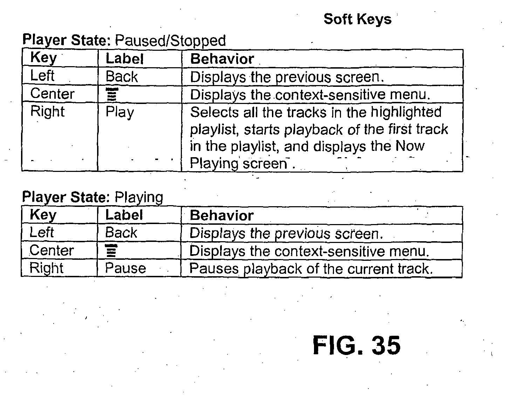

Fig. 35 is a soft key operational table for the playlist screen.

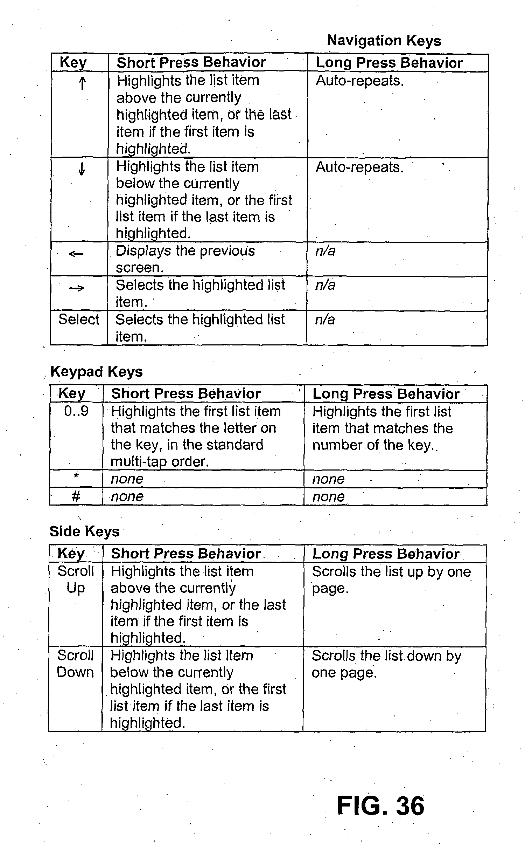

Fig. 36 is a hard key operational table for the playlist screen.

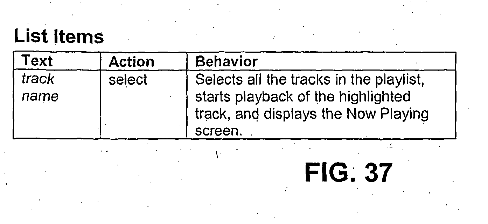

Fig. 37 is a list item operational table for the playlists screen.

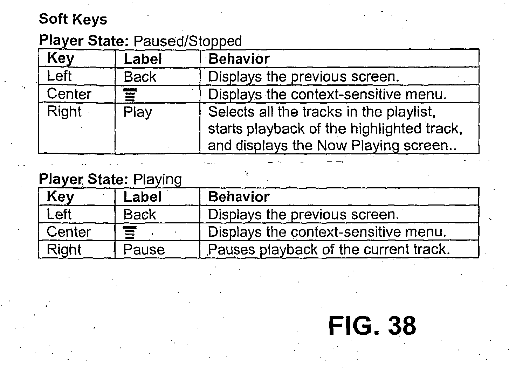

Fig. 38 is a soft key operational table for the playlists screen.

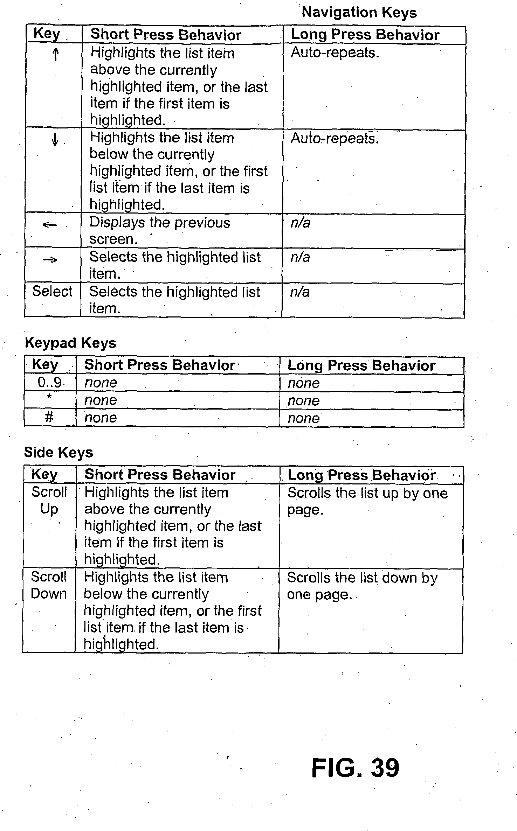

Fig. 39 is a hard key operational table for the playlists screen.

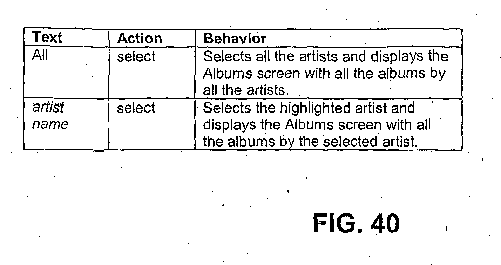

Fig. 40 is a list item operational table for the artists screen.

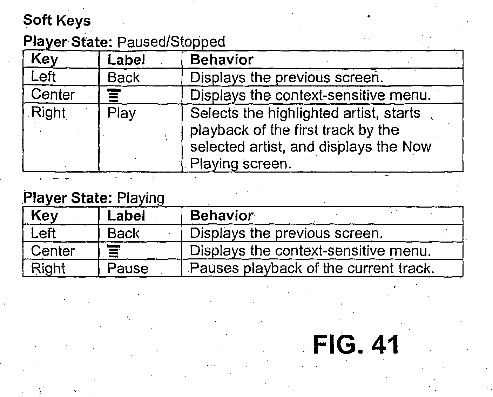

Fig. 41 is a soft key operational table for the artists screen.

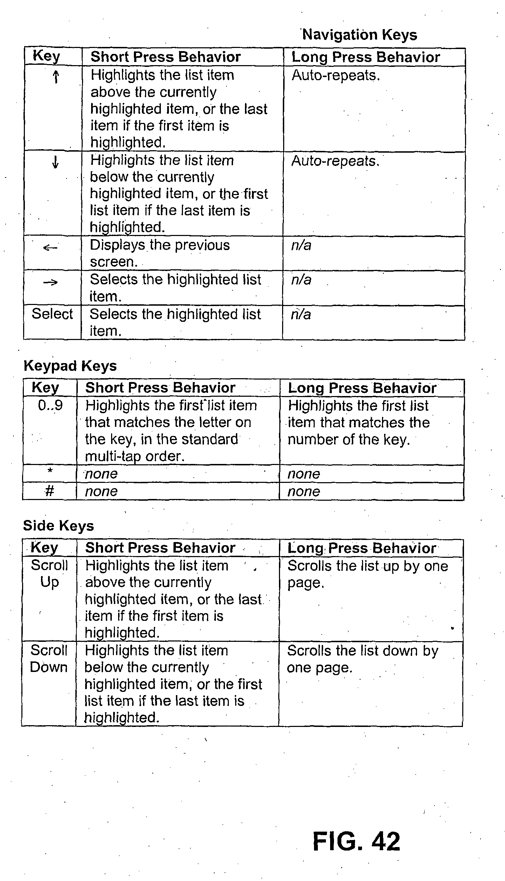

Fig. 42 is a hard key operational table for the artists screen.

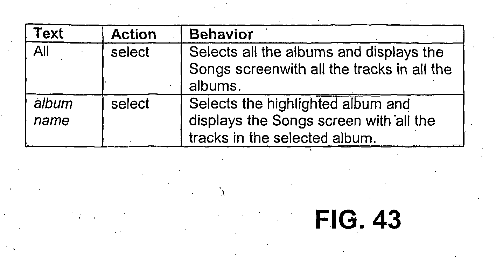

Fig. 43 is a list item operational table for the albums screen.

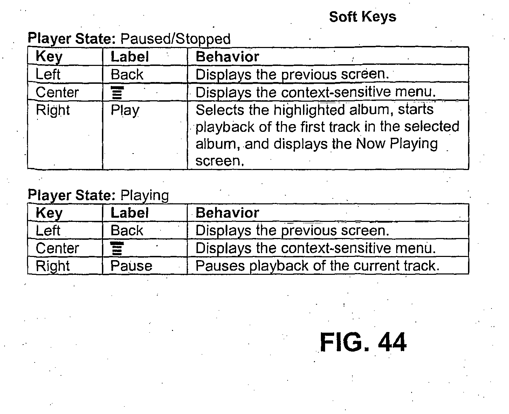

Fig. 44 is a soft key operational table for the albums screen.

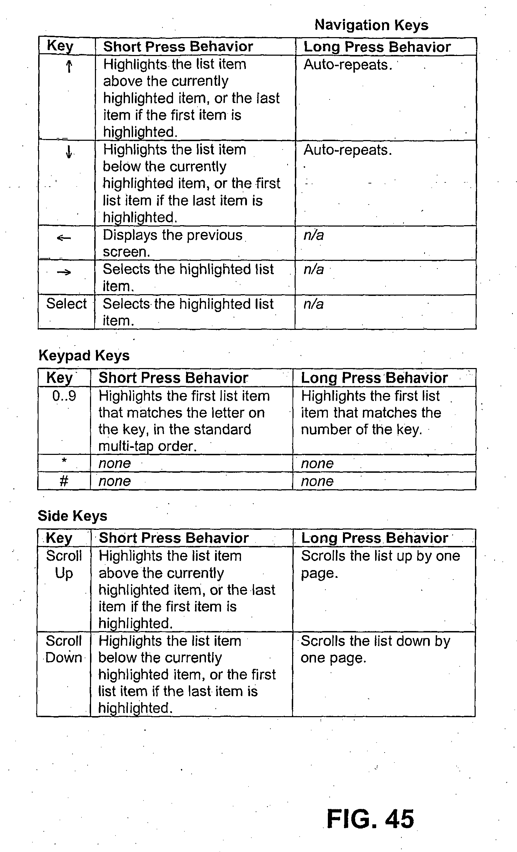

Fig. 45 is a hard key operational table for the albums screen.

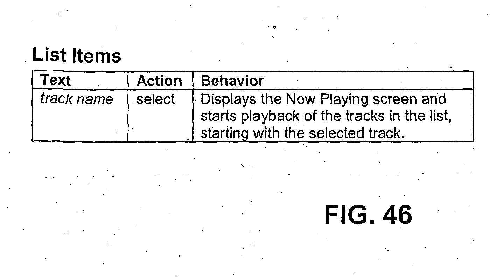

Fig. 46 is a list item operational table for the songs screen.

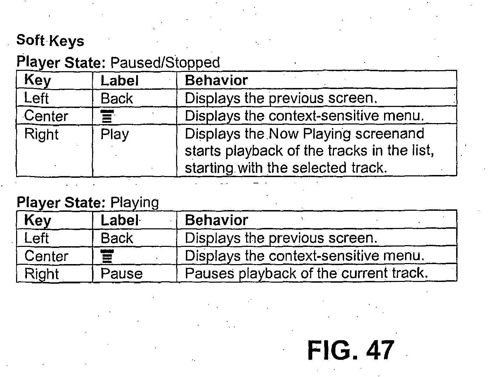

Fig. 47 is a soft key operational table for the songs screen.

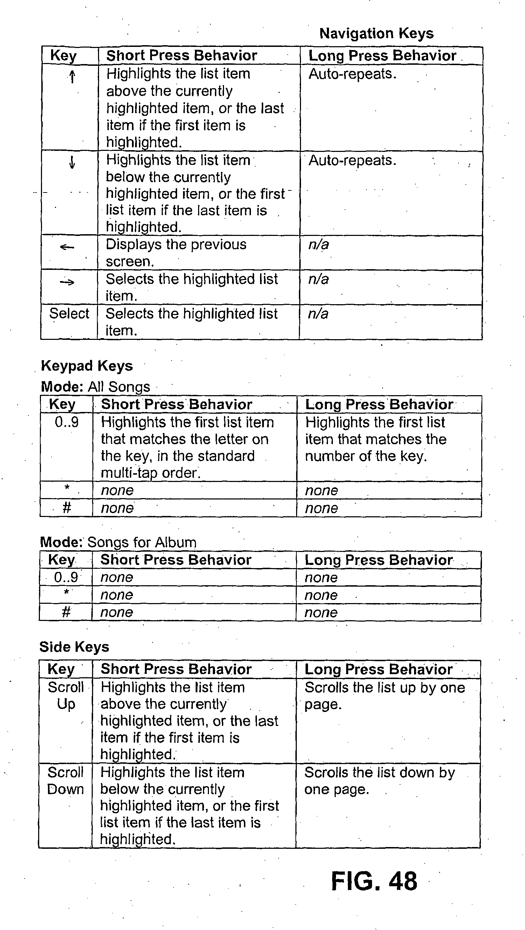

Fig. 48 is a hard key operational table for the songs screen.

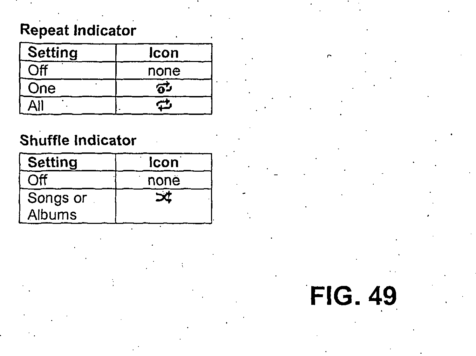

Fig. 49 is a repeat indicator and shuffle indicator operational table for the now playing screen.

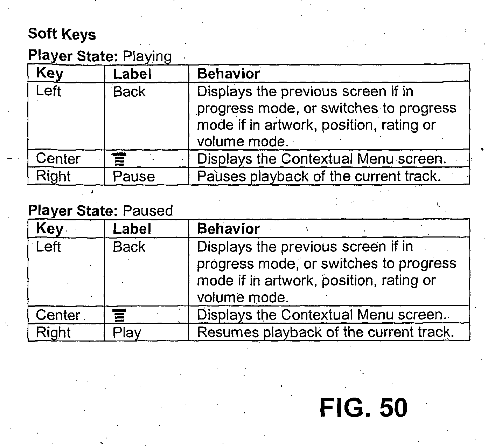

Fig. 50 is a soft key operational table for the now playing screen.

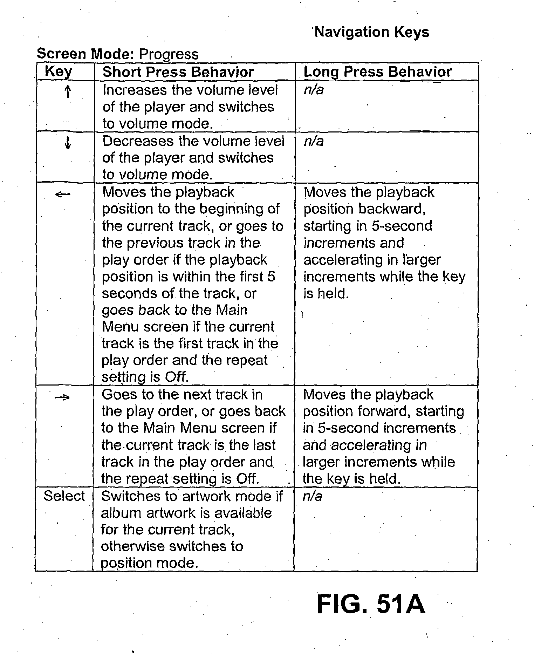

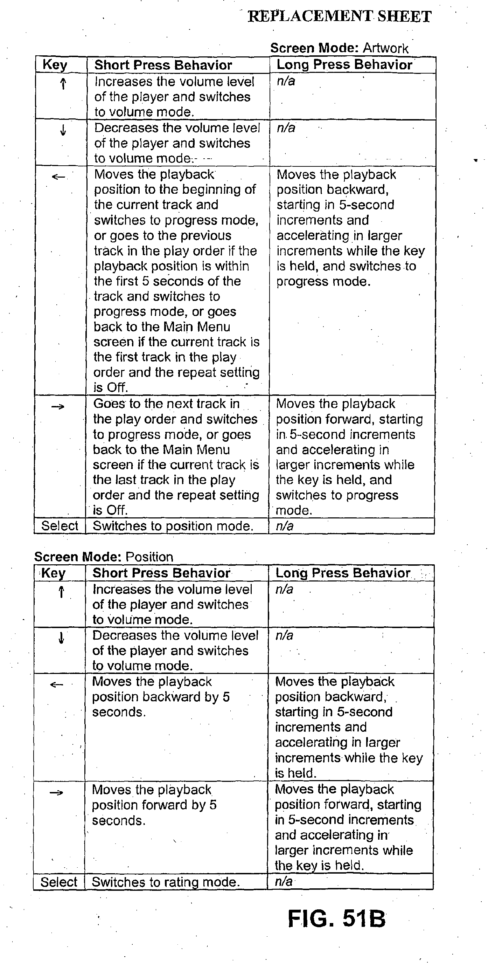

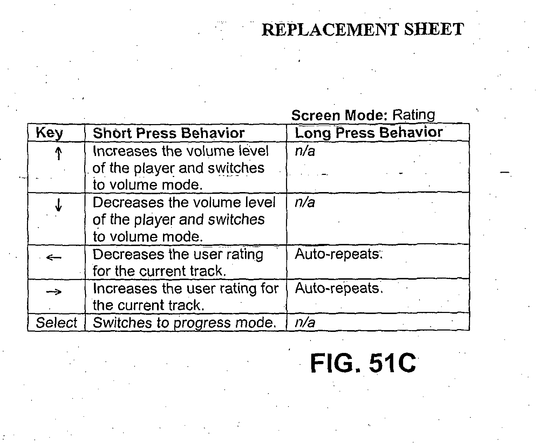

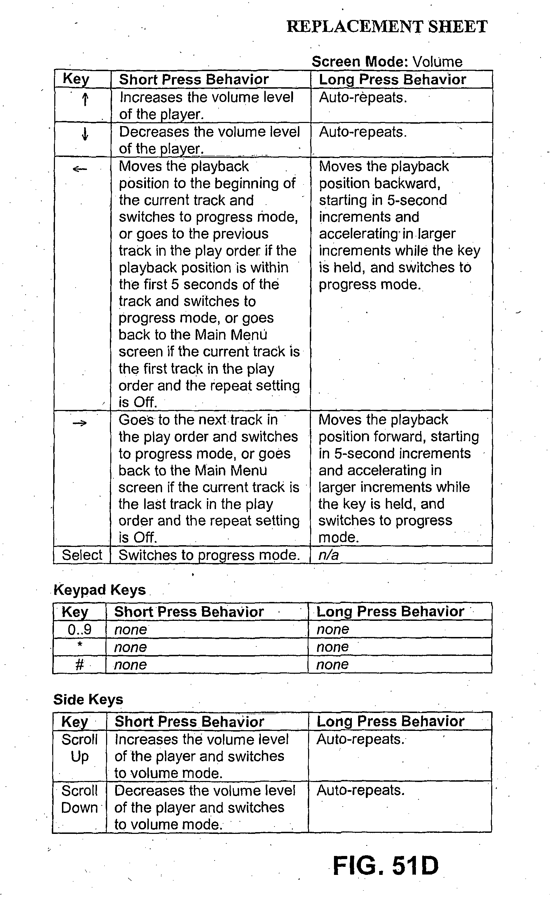

Figs. 51A-51D shows operational tables for the now playing screen.

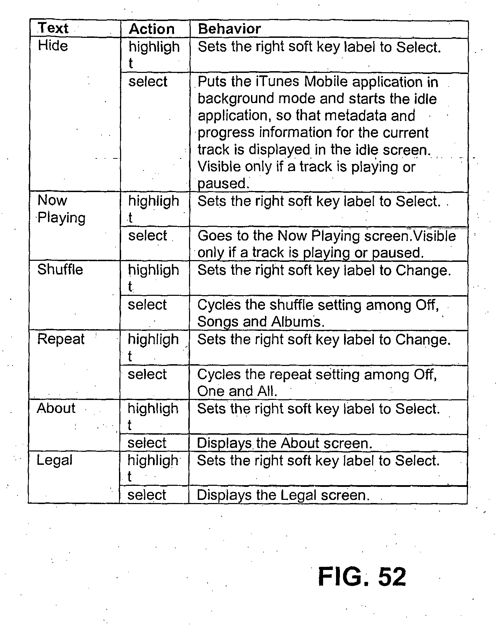

Fig. 52 is a list item operational table for the contextual menu screen.

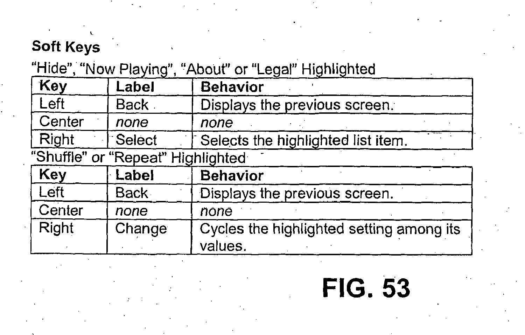

Fig. 53 is a soft key operational table for the contextual menu screen.

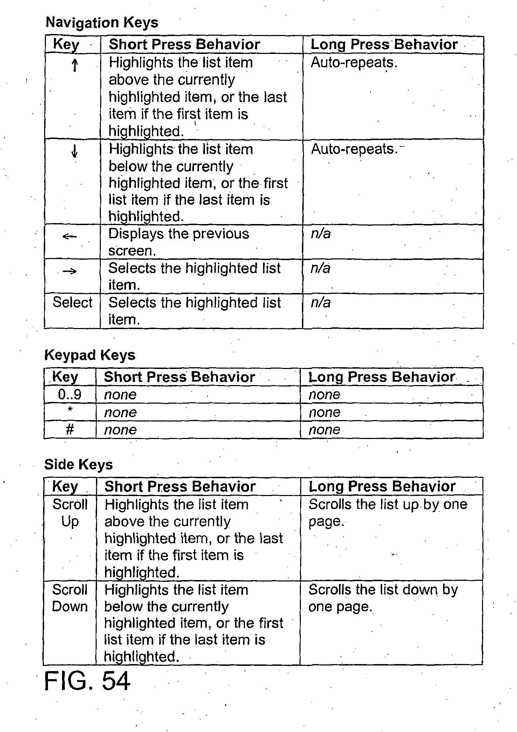

Fig. 54 is a hard key operational table for the contextual menu screen.

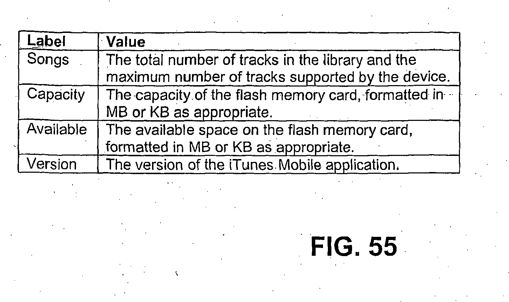

Fig. 55 is a list item operational table for the about screen.

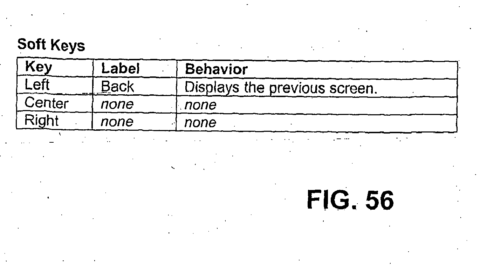

Fig. 56 is a soft key operational table for the about screen.

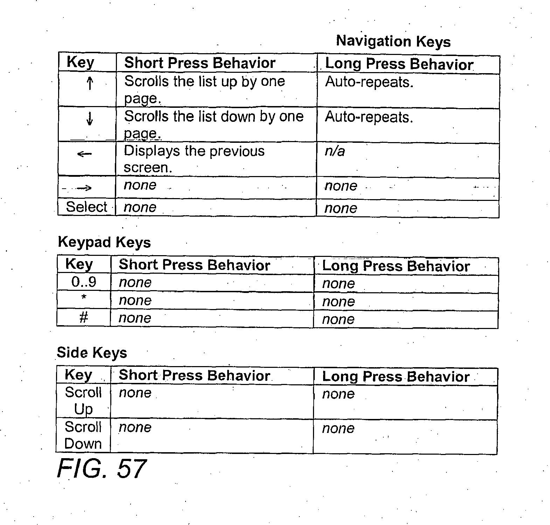

Fig. 57 is a hard key operational table for the about screen.

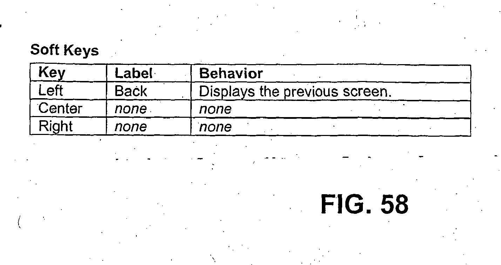

Fig. 58 is a soft key operational table for the legal screen.

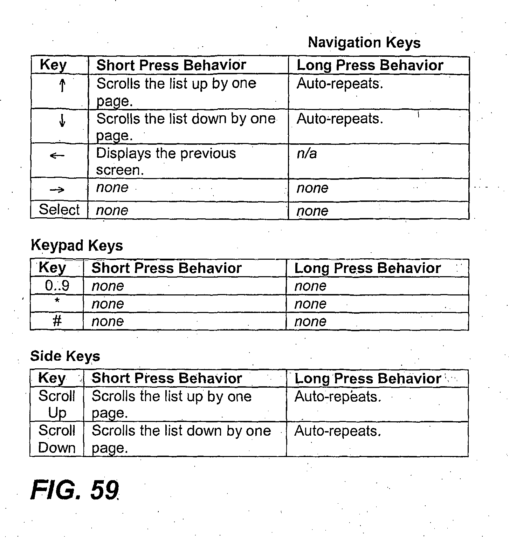

Fig. 59 is a hard key operational table for the legal screen.

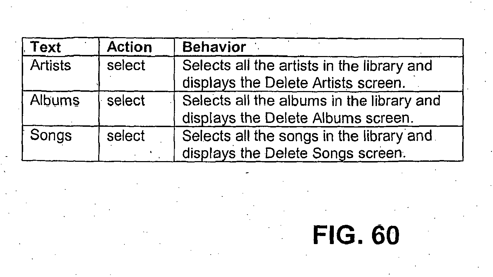

Fig. 60 is a list item operational table for the delete menu screen.

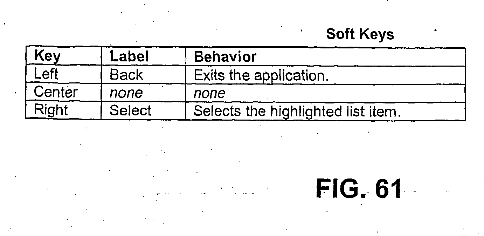

Fig. 61 is a soft key operational table for the delete menu screen.

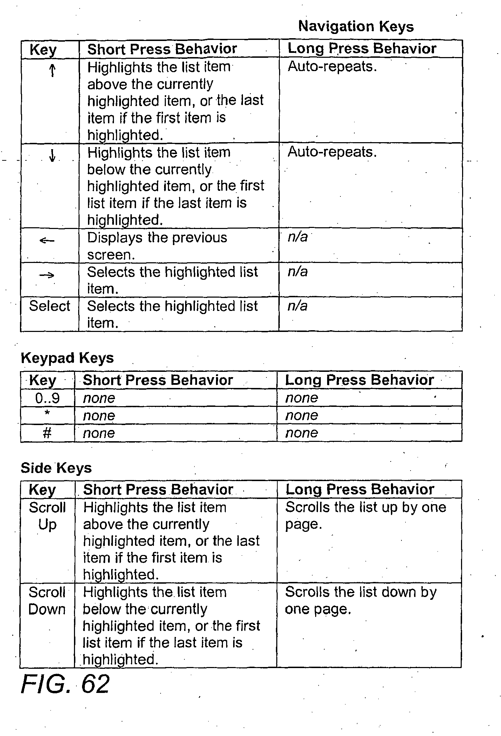

Fig. 62 is a hard key operational table for the delete menu screen.

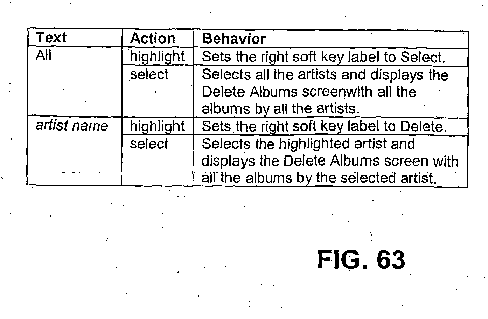

Fig. 63 is a list item operational table for the delete artists screen.

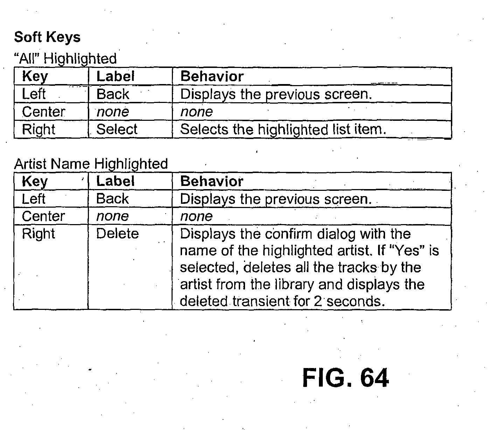

Fig. 64 is a soft key operational table for the delete artists screen.

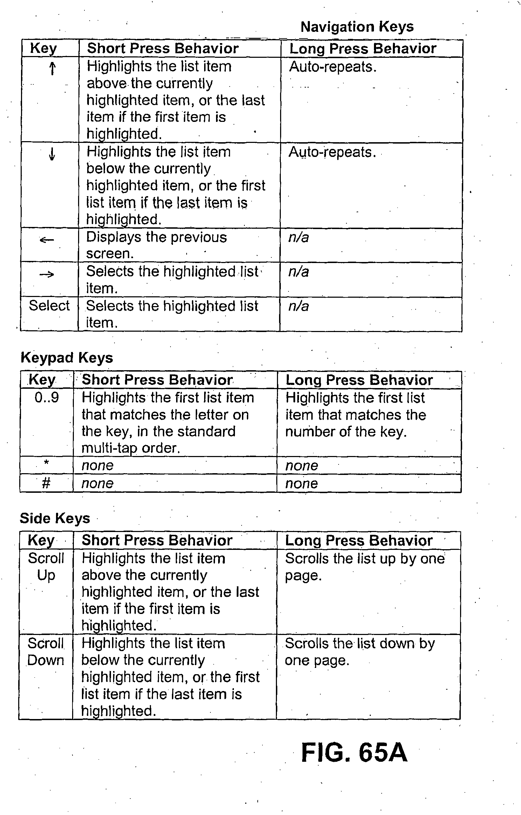

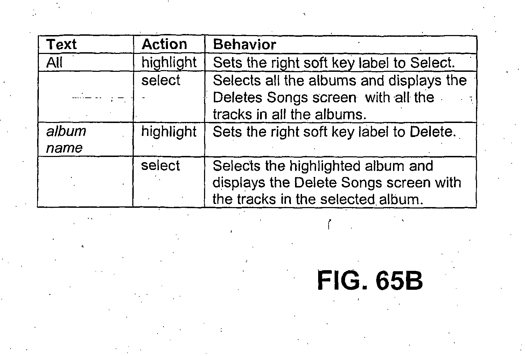

Figs. 65A and 65B show hard key operational tables for the delete artists screen.

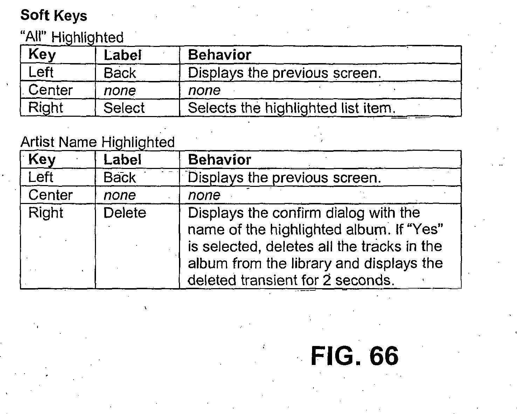

Fig. 66 is a list item operational table for the delete albums screen.

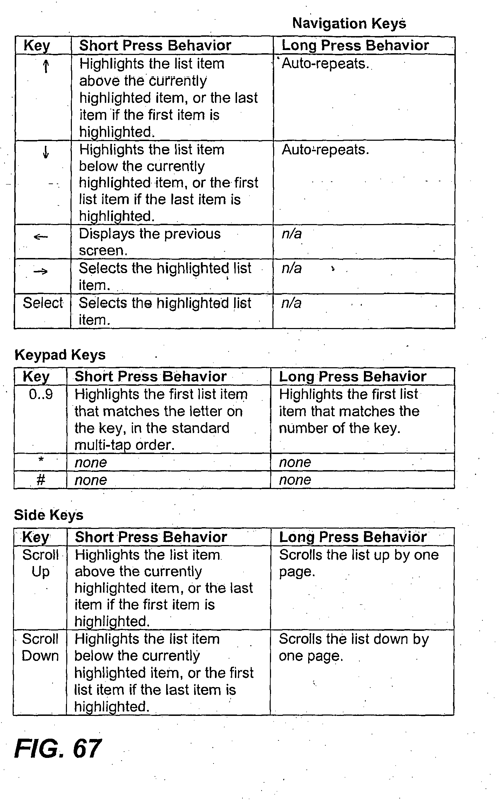

Fig. 67 is a soft key operational table for the delete albums screen.

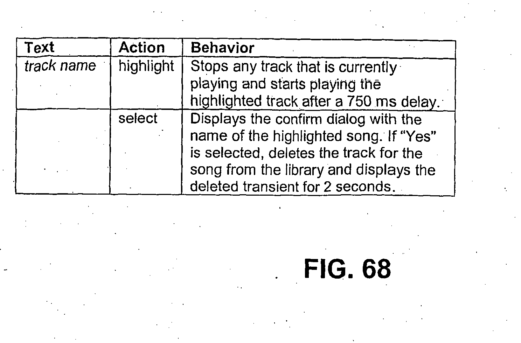

Fig. 68 is a hard key operational table for the delete albums screen.

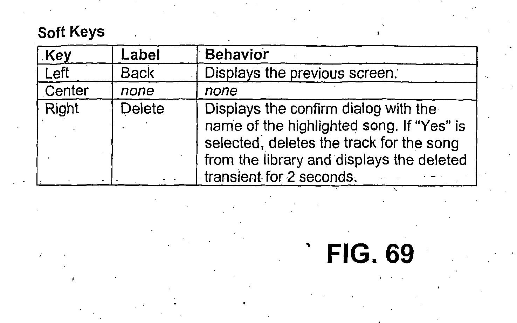

Fig. 69 is a list item operational table for the delete songs screen.

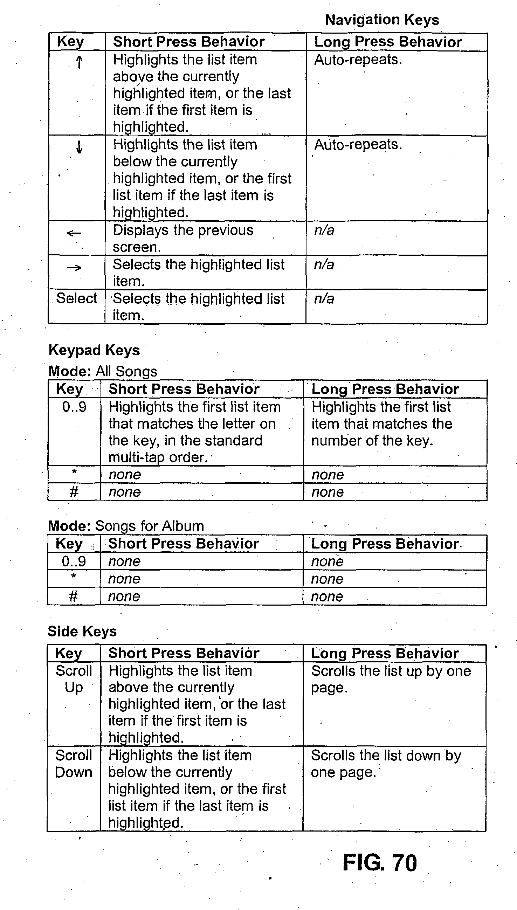

Fig. 70 is a soft key operational table for the delete songs screen.

With the rapid advancement in the ability to store data, personal communication devices, such as MP3 players, cell phones, PDAs, and the like, can accommodate hundreds or even thousands of such data files making the task of selecting, grouping, or retrieving a particular file, or files, a daunting task indeed. Therefore the invention described herein is well suited for providing a user friendly user interface which provides efficient retrieval of data files for use by a portable communication device. Portable communication devices include wireless communication devices as well those communication devices tethered by way of a data link (such as a cable) to a server or other such device.

In the described device, the personal communication device takes the form of a pocket size wireless communication device, such as a cell phone having a display screen suitable for displaying a graphical user interface (GUI) as well as a number of input sensors (such as buttons, dials, wheels, etc.) arrange to receive user supplied input events. Such user supplied inputs can include user supplied commands directed at retrieving specific files, such as digital media, such as audio files, image files, or video files.

A hiearchically ordered graphical user interface are provided that facilitates a user file selection procedure. In this a first order (sometimes referred to as a home interface) provides a highest order of user selectable items each of which, when selected, results in an automatic transition to a lower order user interface associated with the selected item. In one of the described examples, the lower order interface includes other user selectable items associated with the previously selected item from the higher order user interface. In this way, a user can automatically transition from a higher order interface to a lower order interface (and vice versa) by, in some cases, a direct transition. In other cases, the user can transition from the higher order user interface to the lower order user interface (and vice versa) in a stepwise fashion whereby each intervening interface is displayed having any number of user selectable input items each directly associated with the previously selected input item.

In a particular example, the portable multimedia device is a pocket sized, multimedia device (personal digital assistant, personal MP3 player/recorder, and the like) having a display screen arranged to display the various user interfaces and a corresponding user input device. The user input device is typically a manually operated switch, button, dial, wheel, or other such contrivances. Accordingly, an example will now be described in terms a portable multimedia device (capable of storing a number of multimedia assets. For example, in the case of the multimedia device being a multimedia asset player, the multimedia assets can include audio files, image files or video files, as well as any other appropriately formatted data files.

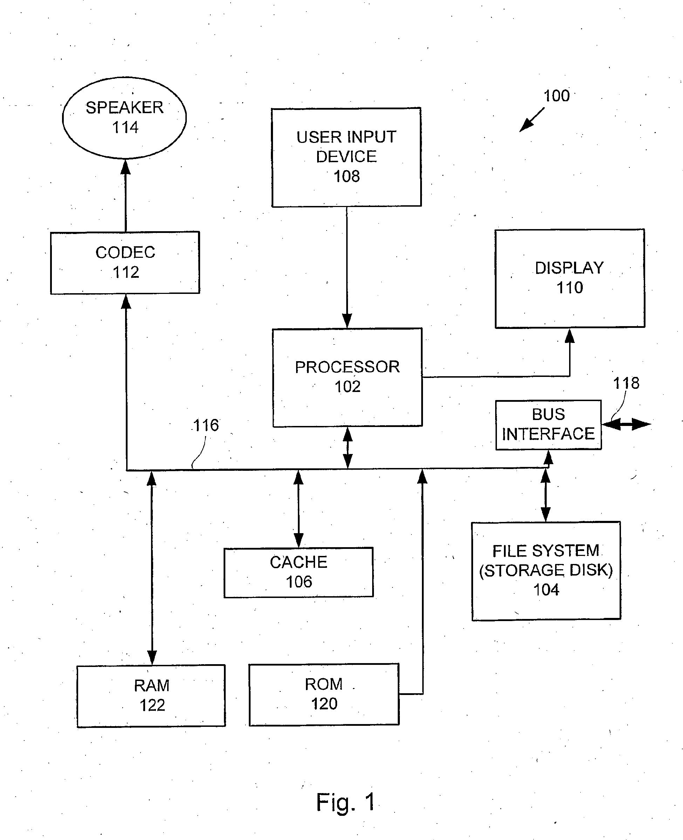

Accordingly, Fig. 1 shows an exemplary portable multimedia device, or media player, 100. The media player 100 includes a processor 102 that pertains to a microprocessor or controller for controlling the overall operation of the media player 100. The media player 100 stores media data pertaining to media assets in a file system 104. The file system 104 is, typically, a storage disk or a plurality of disks. Alternatively, the file system 104 can be re-writable non-volatile memory, such as FLASH memory. The file system 104 typically provides high capacity storage capability for the media player 100. However, since the access time to the file system 104 is relatively slow, the media player 100 can also includes a cache 106. The cache 106 is, for example, Random-Access Memory (RAM) provided by semiconductor memory. The relative access time to the cache 106 is substantially shorter than for the file system 104. However, the cache 106 does not have the large storage capacity of the file system 104. Further, the file system 104, when active, consumes more power than does the cache 106. The media player 100 also includes a RAM 120 and a Read-Only Memory (ROM) 122. The ROM 122 can store programs, utilities or processes to be executed in a non-volatile manner. The RAM 120 provides volatile data storage, such as for the cache 106.

The media player 100 also includes a user input device 108 that allows a user of the media player 100 to interact with the media player 100. For example, the user input device 108 can take a variety of forms, such as a button, keypad, dial, wheel, etc. Still further, the media player 100 includes a display 110 (screen display) that can be controlled by the processor 102 to display information to the user. A data bus 116 can facilitate data transfer between at least the file system 104, the cache 106, the processor 102, and the CODEC 112. The media player 100 also includes a bus interface 116 that couples to a data link 118. The data link 118 allows the media player 100 to couple to a host computer.

In one example, the media player 100 serves to store a plurality of media assets (e.g., songs) in the file system 104. When a user desires to have the media player play a particular media item, a list of available media assets is displayed on the display 110. Then, using the user input device 108, a user can select one of the available media assets. The processor 102, upon receiving a selection of a particular media item, supplies the media data (e.g., audio file) for the particular media item to a coder/decoder (CODEC) 112. The CODEC 112 then produces analog output signals for a speaker 114. The speaker 114 can be a speaker internal to the media player 100 or external to the media player 100. For example, headphones or earphones that connect to the media player 100 would be considered an external speaker.

For example, in a particular example the available media assets are arranged in a hierarchical manner based upon a selected number and type of groupings appropriate to the available media assets. For example, in the case where the media player 100 is a music player, the available media assets take the form of audio files (each of which conesponds to a digitally encoded song or other audio rendition) stored at least in part in the file system 104. The available media assets (or in this case, songs) can be grouped in any manner deemed appropriate. In one arrangement, the songs can be arranged hierarchically as a list of music genres at a first level, a list of artists associated with each genre at a second level, a list of albums for each artist listed in the second level at a third level, a list of songs for each album listed in the third level at a fourth level, and so on.

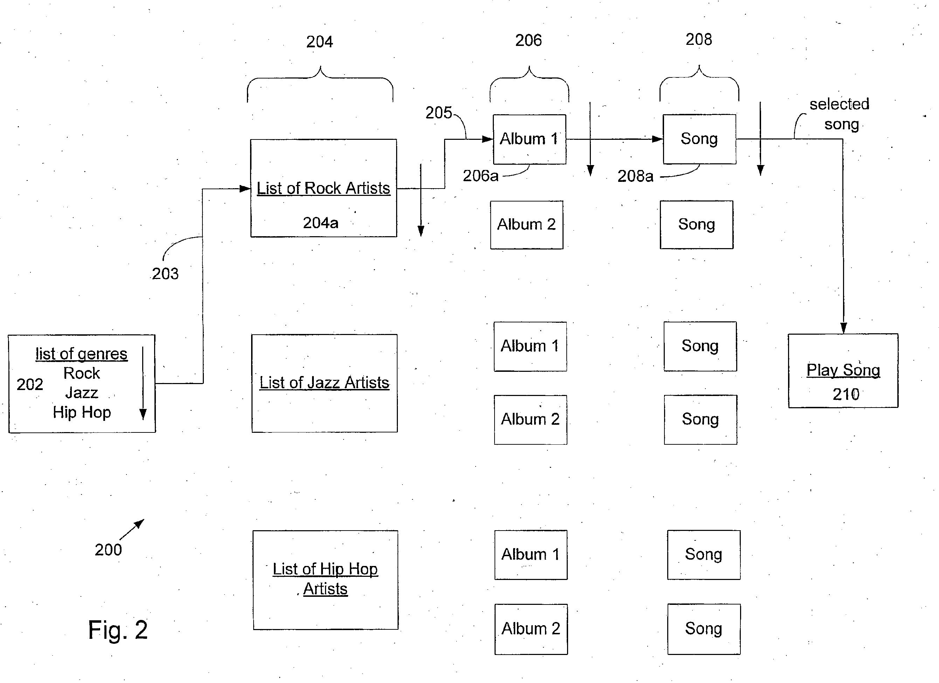

Accordingly, Fig 2 illustrates an hierarchically ordered menu 200 used to navigate through those stored media assets of interest to a user. It should be noted that in the described example, the menu 200 is navigated by the user scrolling vertically within a particular level in order to peruse and eventually select a particular item located within that level. Once selected, the menu 200 is automatically transitioned in a horizontal manner to a lower order interface associated with the selected item. For example, at a first level, a list of music genres 202 (ROCK, JAZZ, HIP HOP) corresponding to the available audio files is displayed. In order to select a particular music genre, a user scrolls "vertically down" the list 202 (usually accompanied by a pointer such as an arrow or by highlighting the adjacent item) until a desired input item is reached. Upon selecting a particular music genre (ROCK, for example), an automatic horizontal traversal 203 to a lower order interface 204 that includes a display of a list of ROCK artists 204a corresponding to the selected ROCK genre. Again after scrolling in a vertical direction in the ROCK artists list 204a, a user selects a particular one of the listed ROCK artists included in the list 204a resulting in another automatic horizontal traversal 205 to a lower order interface 206 denoting an album 206a (from a list of albums 206, if appropriate) associated with the selected artist. This procedure is continued until a particular song 208a from a list of songs 208 (included in the selected album) is selected. Once selected, the song 208a is then ready to be played as described at a play song interface 210 that can in some cases include information related to the selected song 208a.

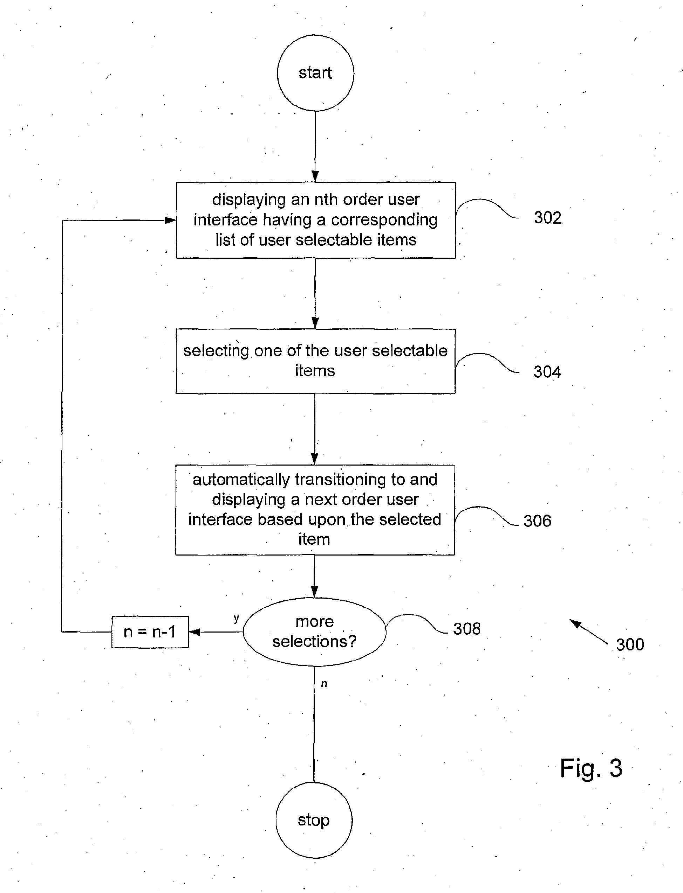

Fig. 3 shows a flowchart 300 illustrating a particular process 300 for selecting a particular one of a group of stored media assets. Accordingly, at 302, a first order user interface is displayed having a list of first order user selectable items. In the example of Fig. 2, the first order user interface is the list of genres 202 whereas the first order user selectable items correspond to the various genres listed. Next, at 304, at least one of the user selectable items are selected. Subsequently, at 306, an automatic transition to and substantially simultaneous display of a lower order user interface corresponding to the selected item. At 308, a determination is made whether or not there are additional order user interfaces based upon the latest selected item. For example, from Fig. 2 above, selection of the Rock genre from the list 202 initiates the automatic transition to the lower order user interface and substantially simultaneous display of the list of ROCK artists 204a. This process continues until a lowest order interface (i.e., the Play Song display 210) is reached at which point the selection process ends and the selected multimedia asset is played.

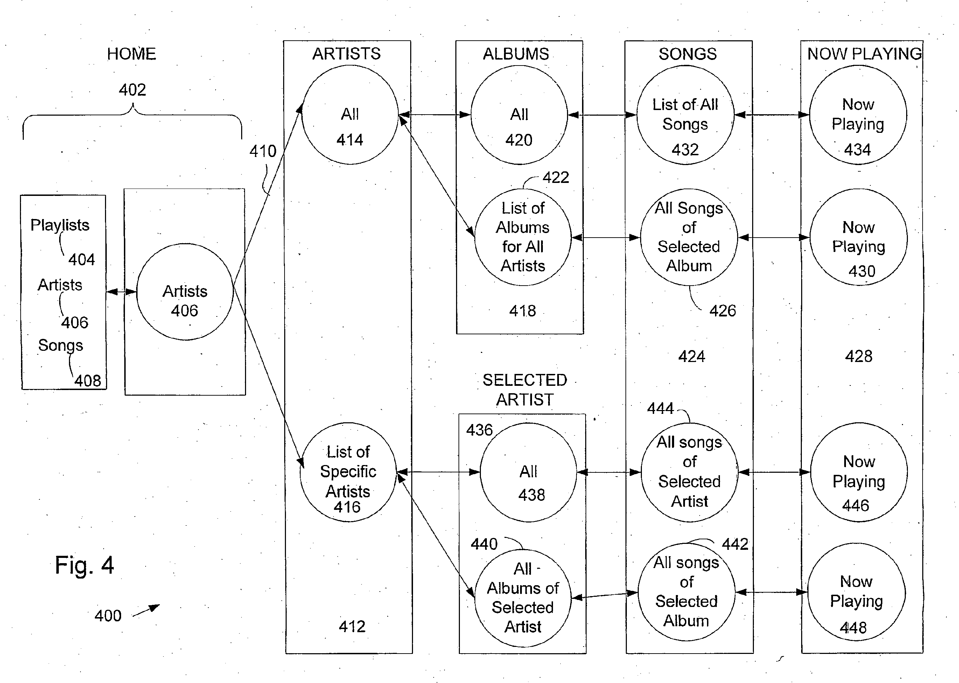

Fig. 4 shows a state diagram 400 of a user interface suitable for providing user provided input for an exemplary media player (along the lines of the player 100). It should be noted that for sake of simplicity, only a single selection path is shown corresponding to a single selection item (i.e., Artists). Accordingly, a home interface 402 provides a list that includes a PLAYLIST item 404, an ARTISTS item 406, and a SONGS item 408 each of which is selectable by a user. It should be noted that each item is associated with a particular grouping of the multimedia assets (which in this example are audio files) stored at least in the file system 104. For example, the PLAYLIST item 404 is associated with a number of customizable playlists (i.e., a compendium of artists, songs, albums, etc. in any order and grouping as deemed appropriate) whereas the ARTISTS item 406 is associated with particular artists whose songs are stored in the file system 104 and so on.

Therefore, once a user selects either the PLAYLIST item 404, the ARTISTS item 406, or the SONGS item 408, an automatic transition to a lower order user interface occurs corresponding to the selected item. For example, if the user selects the ARTISTS item 406, an automatic transition 410 to the ARTISTS user interface 412 occurs where an ALL item 414 (associated with all artists) and a list of specific artists 416 are concurrently displayed. It should be noted that, although not shown, if the user had selected, a particular song from the list of songs associated with the SONGS item 408, then the display would automatically transition directly to a now playing interface (not shown) indicating that the selected song is playing (or is prepared to be played) along with any other data or information deemed appropriate.

Once in the ARTISTS user interface 412, the user has the option of selecting a particular artist by selecting a desired artist from the list of specific artists 416 or selecting all artists by invoking the ALL item 414. For example, if the user selects all artists by invoking the ALL item 414, an automatic transition to a lower order ALBUMS interface 418 occurs where an ALL item 420 corresponding to all songs of all artists and a list of specific albums for all artists 422 are concurrently displayed. If, for example, the user selected a specific album from the list of specific albums 422, then an automatic transition to a still lower order interface ALL SONGS 424 occurs that displays a list of all songs of the selected album 426. At this point, when the user selects a particular song, an automatic transition to a now playing interface 428 occurs having a song information display 430 consistent with the selected song.

If, on the other hand, had the user had invoked the ALL item 420 in the ALBUMS interface 418, then songs interface 424 would display a list of all songs 432 of all the artists. At this point, the user could select a particular song from the list of all songs 432 resulting in an automatic transition to the now playing interface 428 having a song information display 434 consistent with the selected song.

A similar procedure can be followed in the case where instead of invoking the ALL item 414, the user had selected a particular artist from the list of artists 416. In this case, the act of selecting a particular artist initiates an automatic transition to a selected artist interface 436 that includes an ALL item 438 that points to all songs of the selected artist stored in the media player and a list of all albums of the selected artist 440 that are stored in the media player. Selecting one of the albums from the list of albums 440 results in an automatic transition to the songs interface 424 that includes a list of all songs associated with the selected album 442. On the other hand, invoking the ALL item 438 results in an automatic transition to the songs interface 424 having a list of all songs of the selected artist 444. Once in the songs interface 424, the user is free to select any song listed resulting in an automatic transition to the now playing interface 428. For example, selecting one of the songs listed in list of all songs of selected artist 444 or from the list of all songs of selected album 442 results in an automatic transition to the now playing interface 428 simultaneously with the display of song information displays 446 and 448, respectively.

It should be noted that the procedure described above is pathwise bi-directional in that the user can go in either direction along a selected path. It should be further noted, that in some examples, it is desirable to directly transition from the now playing interface 428 to the home interface 402 (and vice-versa) without displaying any of the intervening interfaces.

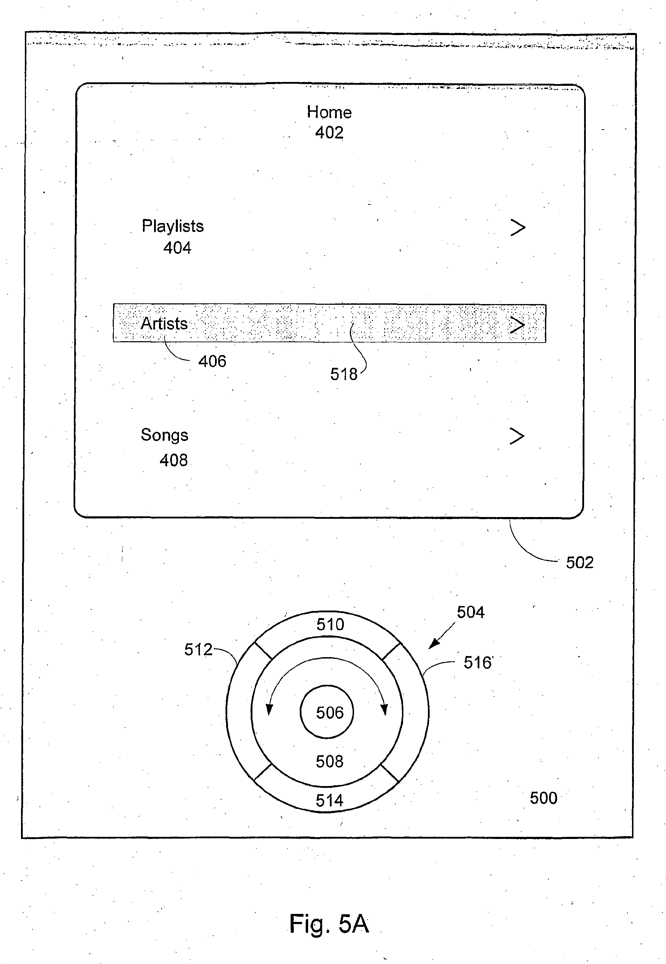

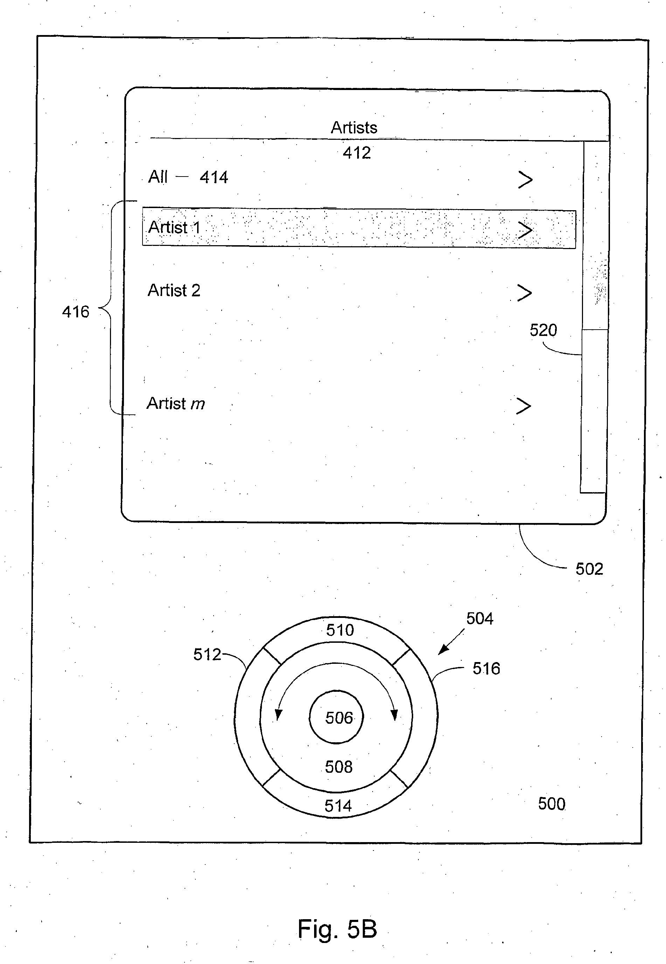

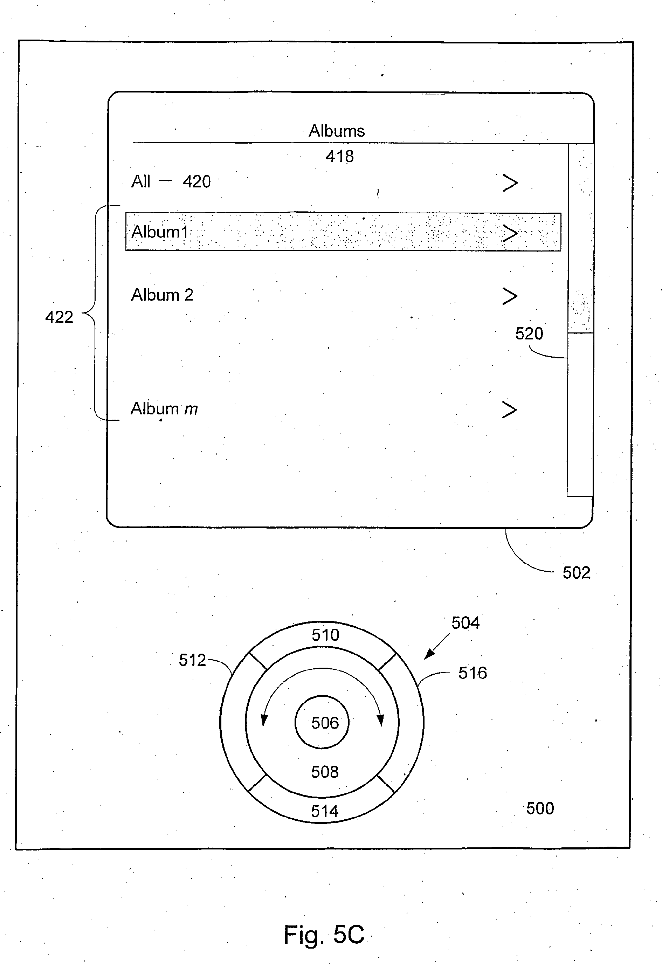

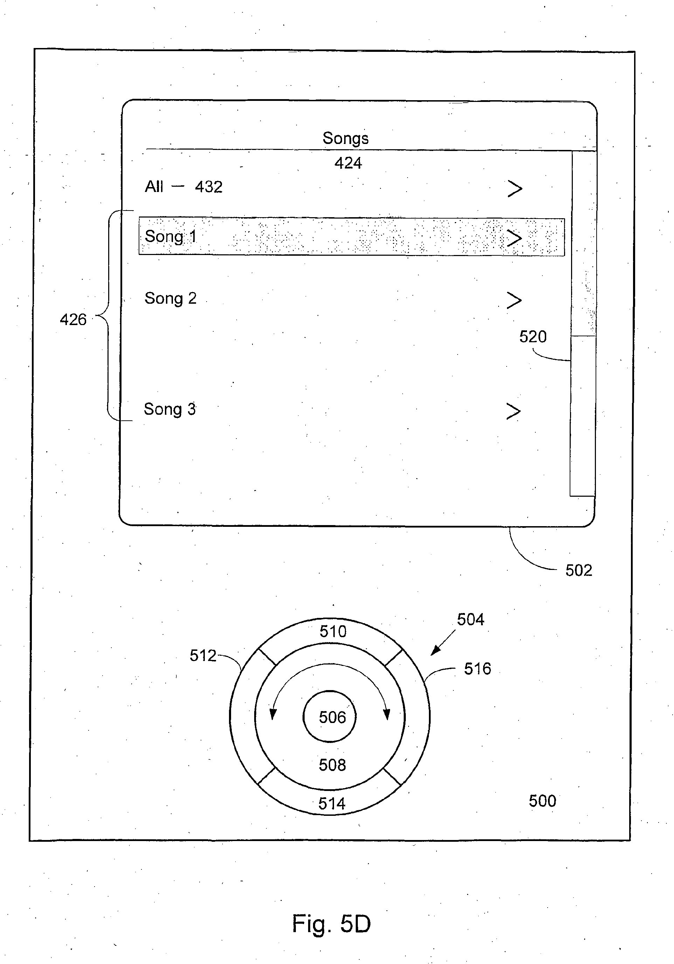

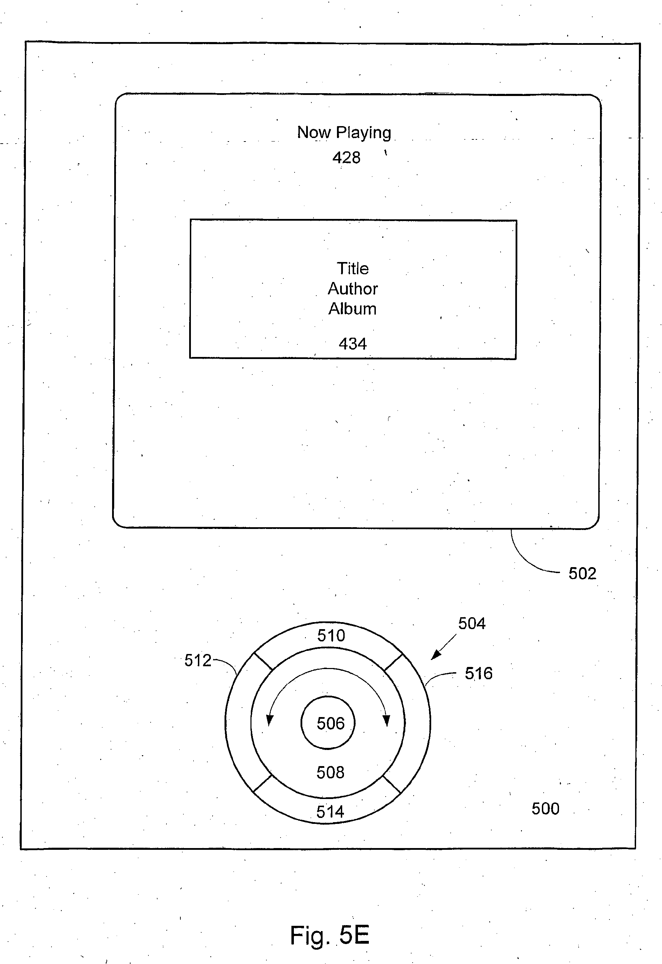

Figs. 5A - 5E illustrate various exemplary user interfaces consistent with selection and play of a media asset. One should note that the various user interfaces illustrated in Figs. 5A - 5E correspond to particular examples of the HOME interface 402, the ARTISTS interface 412, the ALBUMS interface 418, the SONGS interface 424, and the NOW PLAYING interface 428 described above. Accordingly, it should be further noted that each of the interfaces described are incorporated into a representative media player 500 having a display 502 and a user input device 504 that includes a central button 506; a selector wheel 508, and selectors 510 - 516. It is well to note that in this particular example, the selectors 510 - 516 are a back up one level 510, a rewind 512, a play/pause 514, and a fast forward 516. Accordingly, Fig. 5A shows a particular implementation of the HOME interface 402 displayed on the display 502. In order to select the ARTISTS item 406, the user rotates selector wheel 508 in either a clockwise or counterclockwise direction (or any appropriate combination thereof) until the ARTISTS item 406 is rendered selectable (as noted by a semi-transparent highlight bar 518). Once the desired item is highlighted, the user selects the highlighted item by invoking a selection protocol by, for example, pressing the central button 506. Once selected, the HOME interface 402 immediately transitions to the ARTISTS interface 412 as shown in Fig. 5B. As with the selection in the HOME interface 402 of the ARTISTS item 406, a particular artist (or all artists) is selected by manipulating any of the user input devices 504 (such as the selector wheel 508) in combination with an appropriate selection event which can include pressing the central button 506. In this way, the user is provided the capability of navigating the user input menu in any manner that the user deems to be most convenient and efficient. It should be noted that a stack indicator bar 520 indicates the relative position of the selected item in relation to the stack of items associated with the particular selected group. Accordingly, Figs. 5C - 5E show various exemplary user interfaces consistent with the described embodiment of the invention.

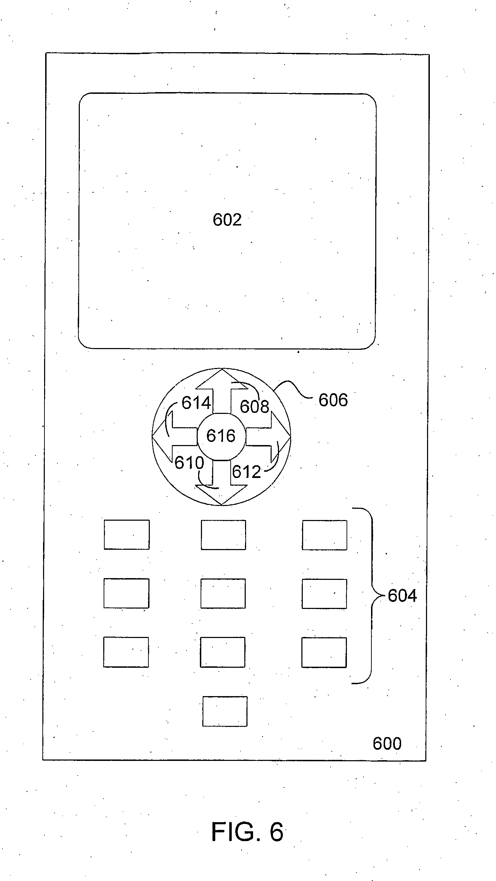

In yet other examples, the personal communication device takes the form of a wireless communication device such as a cell phone, PDA, or other such device. One example of a personal communication device is a cell phone 600 illustrated in Fig. 6. The cell phone 600 includes a display 602 suitable for displaying any of a number of icons (not shown) useful for providing information to a user, a number of input keys 604 (which in this case represent telephonic input characters useful for telephone dialing, text messaging, etc.) and a navigation tool 606 that provides a user the ability to navigate amongst the displayed icons. For example, a user can use the navigation tool 606 to search for and display previously dialed telephone numbers. In the described example, the navigation tool 606 includes any of a number of navigation input devices such as an up-pointer 608, a down pointer 610, a right pointer 612, and a left pointer 614 each of which provides a corresponding navigation instruction to the cell phone 600 that translates into a particular observable action on the display 602. A selector 616 provides for a user to select a designated (e.g., highlighted) icon.

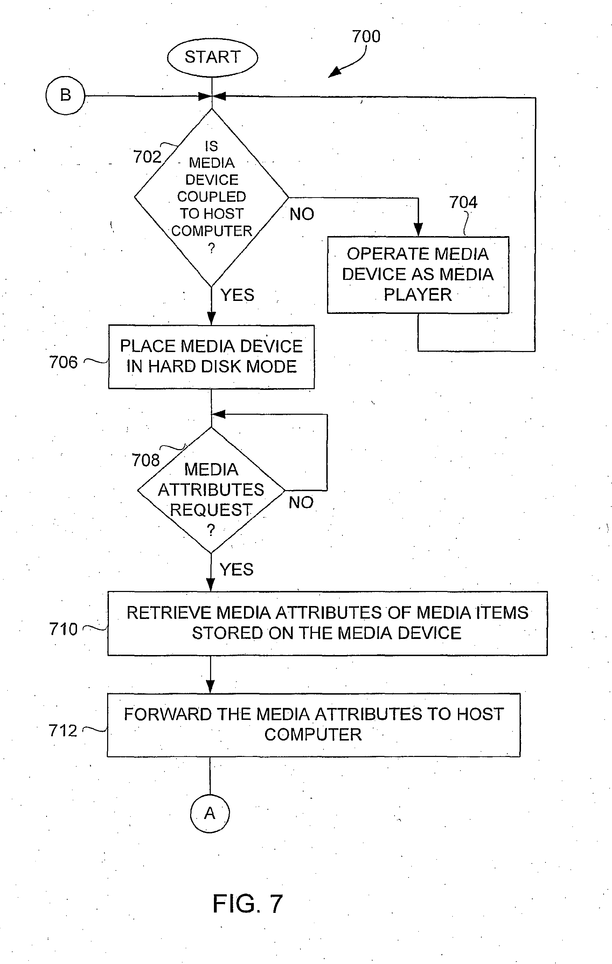

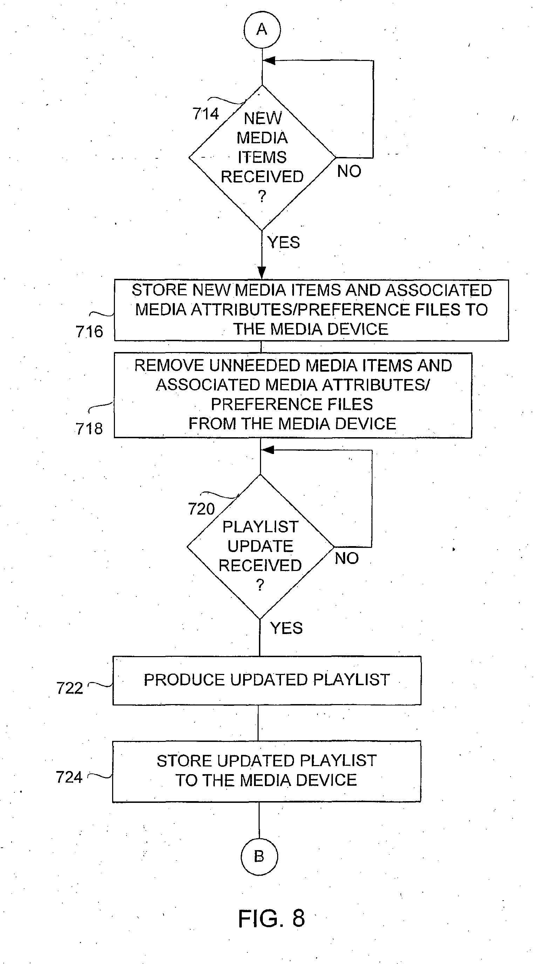

When used as a cell phone, any number of useful personal data files can be loaded into a memory device (not shown) incorporated into the cell phone 600 for later retrieval and access by a user. It should be noted, however, that other examples, the wireless communication device can be used as a multimedia player in much the same manner described above. However, in particularly useful examples, the wireless communication device can provide the functionality of the cell phone as well as provide for the storage and playback of multimedia asset files, such as AAC or MP3 files. In this case, the cell phone/multimedia player wirelessly synchronizes with a remote server. In some cases, the cell phone/multimedia player 600 will periodically wirelessly synchronize to a host computer (e.g., personal computer) as shown in Figs. 7 and 8 that show a flow diagram of synchronization processing 700. The synchronization processing 700 is, for example, performed by a host computer that connects to the wireless communication device over a wired or wireless data link. The media device synchronization processing 700 is performed by a media device that interacts with a host computer over a network. For example, the media device can pertain to the media player 100 illustrated in Fig. 1.

As shown in Fig. 7, the media device synchronization processing 700 is generally operative on the media device when the media device is powered-on. Initially, a decision 702 determines whether the media device has just been coupled to the host computer. When the media device is a wireless communication device, the wireless communication device can couple to the host computer via a wireless network. When the decision 702 determines that the media device has not just been coupled to host computer, then the media device is operated 704 as a media player. In such a mode, the media device operates to browse, search or play media items for its user. The media items can be audio items (e.g., songs). Following the operation 704, the media device synchronization processing 700 returns to repeat the decision 702 and subsequent operations.

On the other hand, when the decision 702 determines that the media device has just been coupled to the host computer, then the media device is placed in a hard disk mode 706. In the hard disk mode, the media device acts as an external hard drive to the host computer. A decision 708 then determines whether the host computer has requested media and or programmable button attributes for the media items residing on the media device. When the decision 708 determines that the host computer is not requesting media and or programmable button attributes, the media device can, but need not, perform other hard drive operations for non-synchronization purposes (not shown). When the decision 708 determines that the host computer is requesting media and or programmable button attributes (i.e., such as through a read operation), then the media and or programmable button attributes of the media items stored on the media device are retrieved 710. After the media and or programmable button attributes are retrieved 710, the media attributes are forwarded 712 to the host computer.

Referring now to Fig. 8, a decision 714 determines whether new and or media file attributes have been received at the media device from the host computer. In other words, in an effort to synchronize the media content and or media attributes residing on the media device with the media content residing at the host computer, the media device will often receive media content from the host computer. Hence, the decision 714 determines whether new media items have been or are presently being received. When the decision 714 determines that such new media items have not been received, then the media device synchronization processing 700 can await such new media items. While waiting for new media items, the media device can, but need not, perform other hard drive operations for non-synchronization purposes (not shown). More generally, other hard disk operations can occur concurrently with synchronization operations. On the other hand, when the decision 714 determines that new media items have been received from the host computer, then the new media items and their associated media attributes are stored 716 to the media device. In one example, the new media items are stored to files in the media device, and the associated media attributes pertaining to the media items are stored in a media database residing on the media device. Additionally, any unneeded media items and their associated media attributes and or programmable button attributes can be removed 718 from the media device. Hence, in this embodiment, by synchronizing the media content residing on the media device with that on the host computer, new media items are not only stored to the media device, but unneeded (e.g., old) media items and their associated media attributes are also removed from the media device.

Following the operation 718, a decision 720 determines whether a play list update has been received. When the decision 720 determines that a play list update has not been received, then the media device synchronization processing 700 can await such a play list update. Alternatively, when the decision 720 determines that a play list update has been received, then an updated play list for the media device is produced 722. The play list update could be the updated play list or could be instructions to update an existing play list. The updated play list is then stored 722 to the media device.

In effect, one or more play lists at the host computer can be synchronized with the media device and thus made available to the media device. A play list identifies particular media items that are to be played in a sequence. Internally, the play list can be represented in the media database as a data structure that points to files of the appropriate media items residing on the storage device within the media device. Hence, for a given play list, the pointers to the files of the appropriate media items on the media device can differ from the pointers to the files for the same media items on the host computer, thus the need to update the pointers if a particular play list is moved between the host computer and the media device.

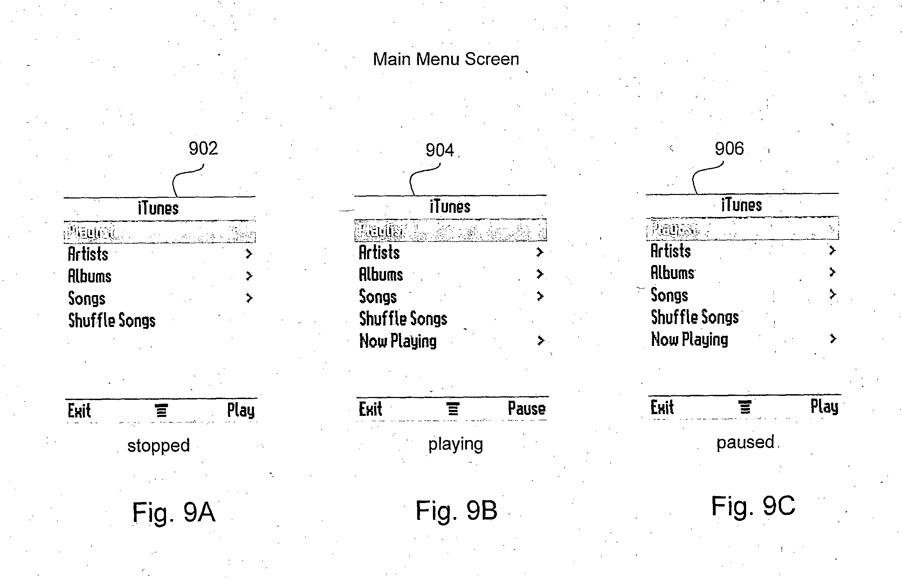

Once the wireless communication device (e.g., cell phone 600) is properly synchronized, a user has the option of selecting any of a number of audio files stored therein. In order to facilitate this selection process, a hierarchically ordered graphical user interface can be presented on a display (e.g., the display 602) having, in one example, a form illustrated in Figs. 9 - 27. It should be noted that for the remainder of this discussion, the wireless communication device is assumed to have a number of audio (i.e., music and song) files stored therein. In this way, the wireless commuucation device can be a cell phone/media player combination device, or any other device arranged in a like manner.

Accordingly, Figs. 9A - 9C show a main menu screen 900, 904 and 906, respectively, each being associated with a particular operational state (i.e., stopped in Fig. 9A, playing in Fig. 9B, or paused in Fig. 9C) of a wireless communication device. In general, the main menu screen is the home screen of a graphical user interface from which a user can view, at least, a master playlist, a list of artists, a list of albums, and a list of songs in a library of audio files stored in the wireless communication device. The main menu screens can also enable the user to request operations. For example, the main menu screen 902 includes a "shuffle songs" item in the graphical user interface, which if selected causes a shuffle operation. As another example, the main menu screens 904 and 906 include a "Now Playing" item in the graphical user interface, which, if selected, causes display of media attribute information for a media item being played. In addition to the above list of stored data, the various screens provide one or more soft key functions. The soft key functions can include an EXIT icon, a play icon, and a pause icon depending upon the corresponding operational state of the personal communication device.

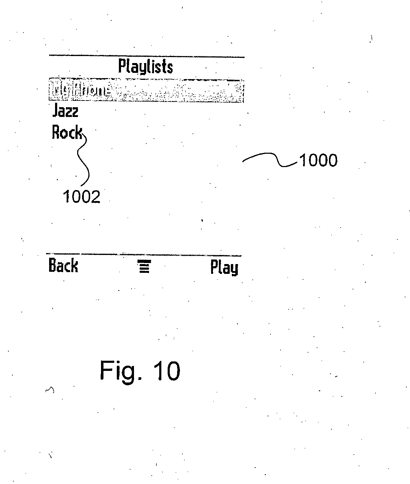

Fig. 10 shows a particular example of a playlists screen 1000. In the example shown in Fig. 10, the playlists screen 1000 displays the names of all the playlists that have been added to the wireless communication device including and starting with a master playlist 1002, that includes all the tracks stored in the wireless communication device. From the playlists screen 1000, the user can view the tracks in a playlist or start playing the first track in a playlist.

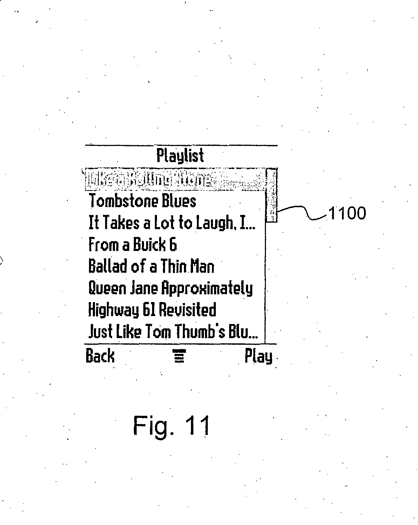

Fig. 11 shows a particular example of a playlist screen 1100. The playlist screen displays the names of the tracks in the current playlist in the order in which they will be played. The user can arrange the order of the tracks in the playlist as desired.

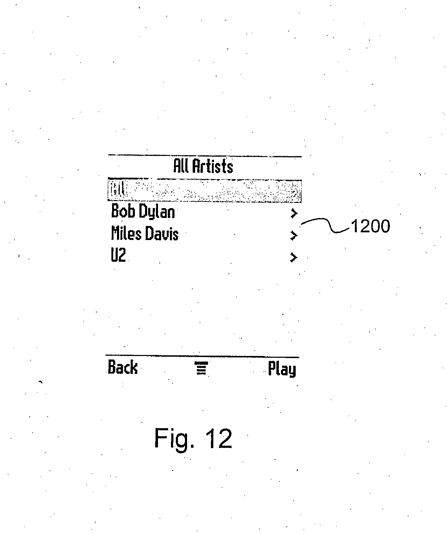

Fig. 12 shows a particular example of an artists screen 1200. The artists screen 1200 displays a list of all the artists stored in the wireless communication device in any appropriate order, such as alphabetical. From the artists screen 1200, the user can view all the albums by an artist or start playing all the tracks by an artist.

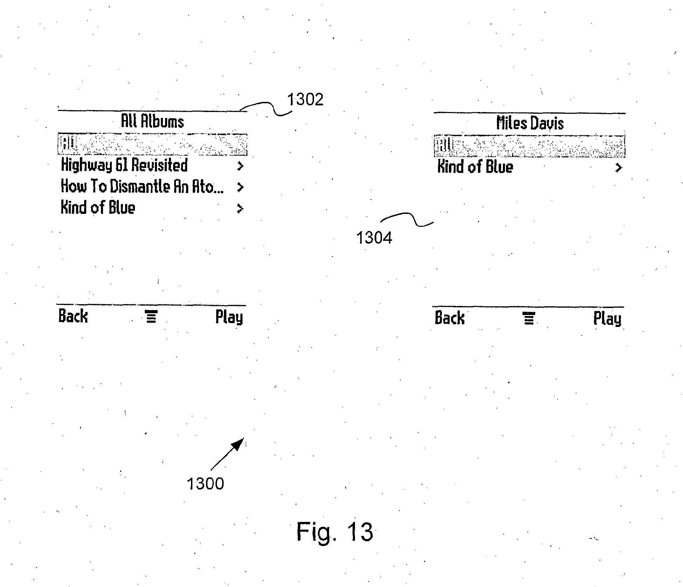

Fig. 13 shows a particular example of an albums screen 1300. The albums screen 1300 displays a list of the albums stored in the wireless communication device in any appropriate order, such as alphabetical or order set by user, or order added to the device. When entered from the main menu screen 900, all the albums stored in the wireless communication device are displayed in an all albums screen 1302. When entered from the artists screen 1200, the albums for the selected artist are displayed in a particular albums screen 1304. From the albums screen 1300, the user can view all the tracks in an album or start playing all the tracks in an album.

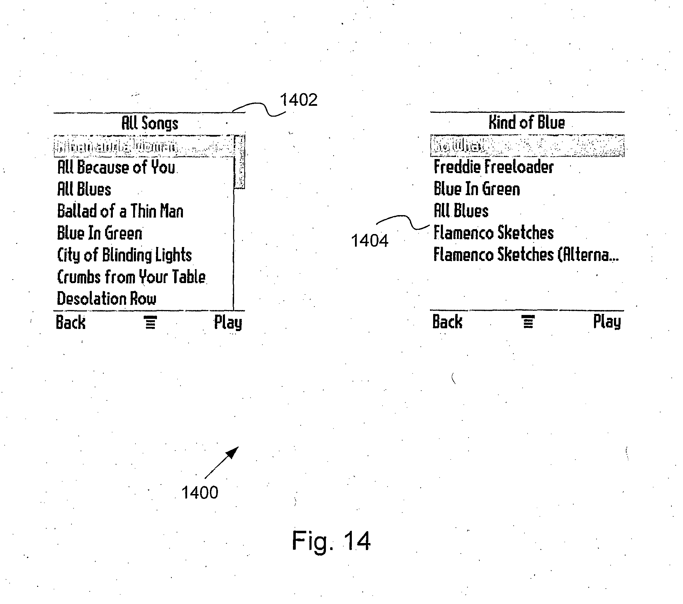

Fig. 14 shows a particular example of a songs screen 1400. The songs screen 1400 displays a list of track names in any appropriate order, such as alphabetical, or order set by user, or order added to the device. When entered from the main menu screen 900, all the tracks in the library are displayed in an all songs screen 1402. When entered from the albums screen 1300, the tracks for the selected album are displayed in a particular songs screen 1404.

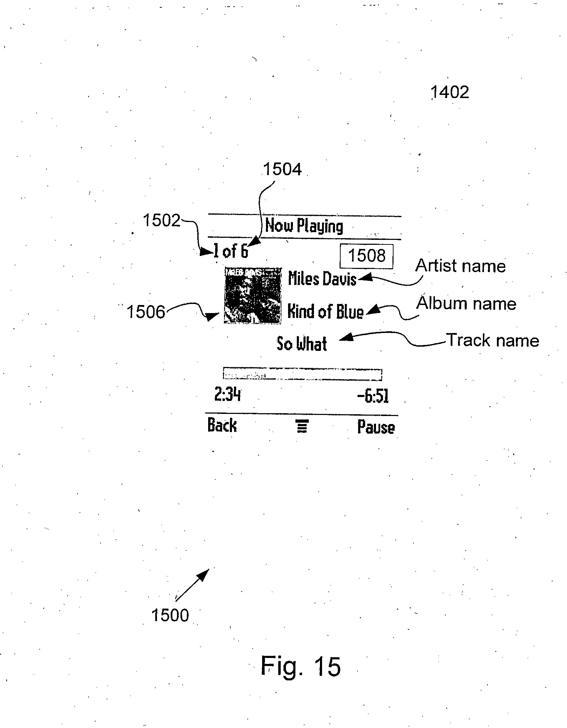

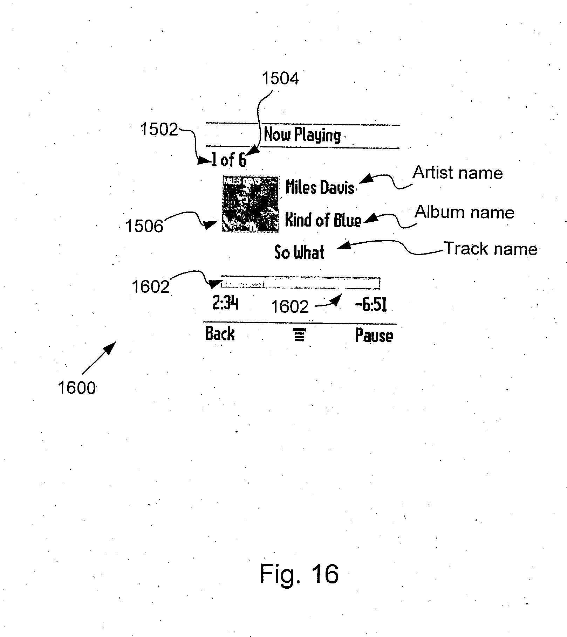

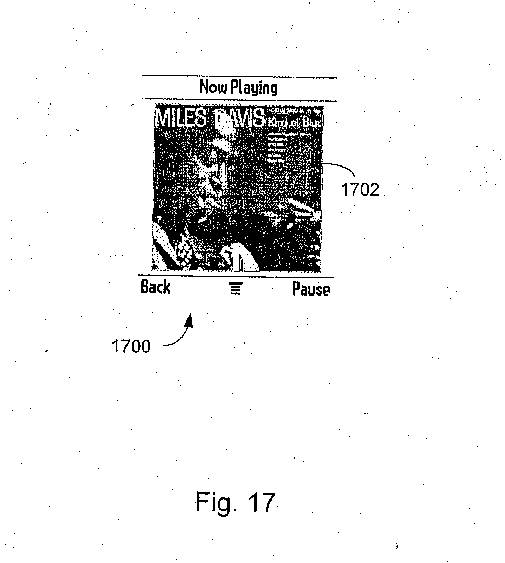

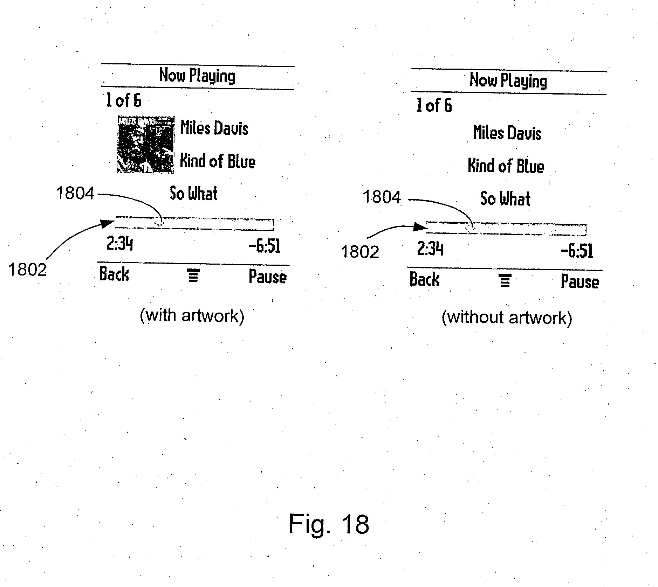

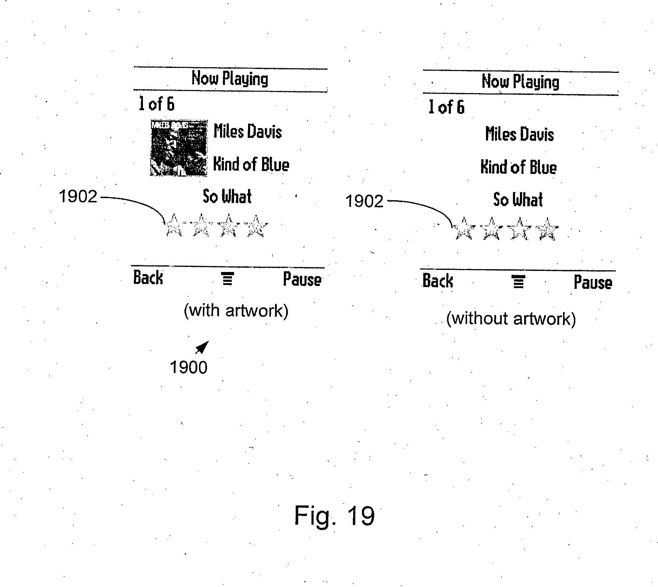

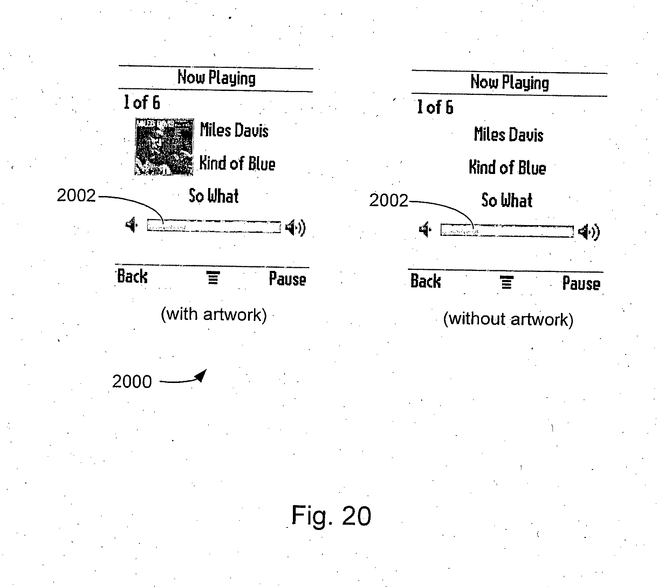

Figs. 15 - 20 shows a particular example of a now playing screen. As shown in Fig. 15, in general, the now playing screen displays metadata information for the track that is currently playing, along with playback progress information, and in particular displays an index 1502 of the current track in play order, and the total number 1504 of tracks in the play order. The metadata information includes artist, album, track name and any available album artwork image 1506. In the described example, the track name scrolls horizontally if it is wider than the width of the screen. In addition, the repeat and shuffle settings for the current playlist are indicated by icons in the upper right corner (1508). In the described example, the now playing screen has five modes each having a particular display screen: progress mode (progress mode screen 1600 in Fig. 16), artwork mode (artwork mode screen 1700 in Fig. 17), position mode (position mode screen 1800 in Fig. 18), rating mode (rating mode screen 1900 in Fig. 19), and volume mode (volume mode screen 2000 in Fig. 20).

Referring to Fig. 16, in progress mode, the progress mode screen 1600 displays a progress bar 1602 with an elapsed time and a remaining time for the current track. In artwork mode (Fig. 17), the artwork mode screen 1700 a full screen album artwork image 1702 is displayed if artwork is available for the current track. In position mode (Fig. 18), the position mode screen 1800 (with or without artwork) displays a progress bar 1802 with a position indicator 1804and allows the user to adjust the playback position with the current track. In rating mode (Fig. 19), the rating mode screen 1900 (with or without artwork) displays a user rating 1902 for the current track and may allow the user to adjust the rating. In volume mode (Fig. 20), the volume mode screen 2000 (with or without artwork) displays a current volume level 2002 of the player and allows the user to adjust the volume level.

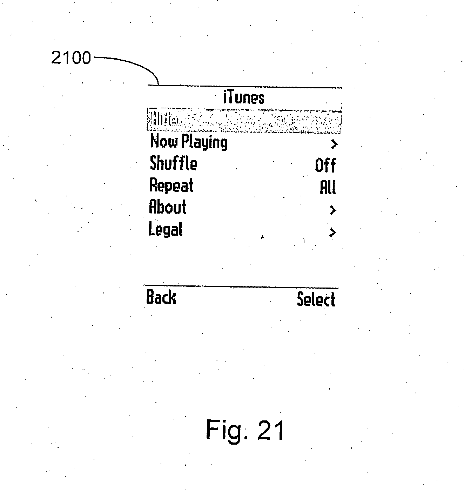

Fig. 21 shows a contextual menu screen 2100. The contextual menu screen 2100 is a screen that can be accessed via a soft key to display infrequently used preferences, settings or information.

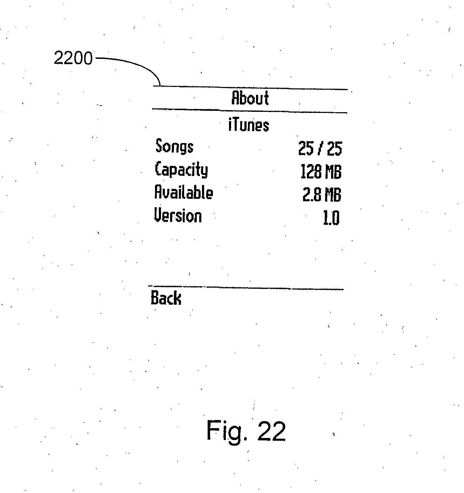

Fig. 22 shows an about screen 2200. The about screen 2200 displays statistical information that includes the total number of tracks in the library, the maximum number of tracks supported by the wireless communication device, the capacity of internal memory (such as a flash memory card), the available space in the internal memory, and the current version of a software application used on the wireless communication device.

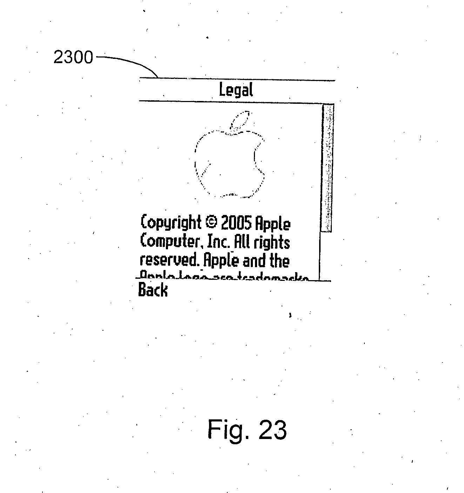

Fig. 23 shows a legal screen 2300. The legal screen 2300 displays copyright and other legal infomation pertinent to the wireless communication device and any application thereon.

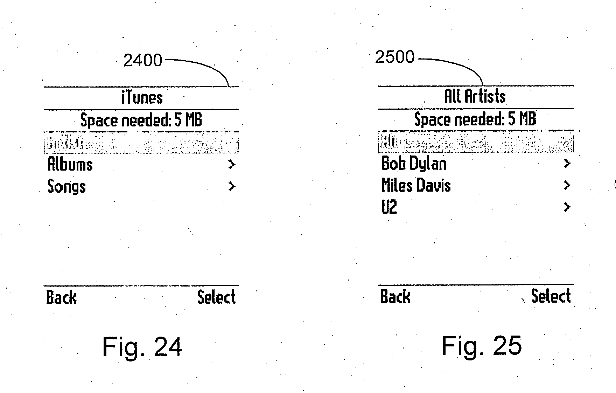

Fig. 24 shows a delete menu screen 2400. The delete menu screen 2400 is displayed in what is referred to in the delete-on-download mode. It allows the user to delete one or more tracks from the wireless communication device in order to free-up space on the internal memory for over the air downloaded content. The delete menu screen 2400 also indicates an amount of space needed.

Fig. 25 shows a delete artists screen 2500. The delete artists screen 2500 displays a list of all the artists stored in the wireless communication device and allows the user to view the albums for an artist or to delete all of the tracks for an artist on the wireless communication device. The delete artists screen 2500 also indicates an amount of space needed.

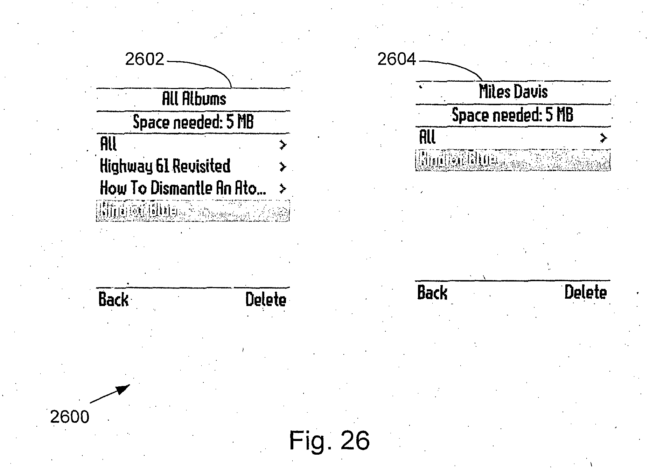

Fig. 26 shows delete albums screens 2600. The delete albums screens 2600 displays a list of all the albums stored in the device and allows the user to view all the tracks in an album or to delete all the tracks in an album. When entered from the delete menu screen 2400, all the albums in the wireless communication device are displayed (2602). When entered from the delete artists screen 2500, the albums for the selected artist are displayed (2504).

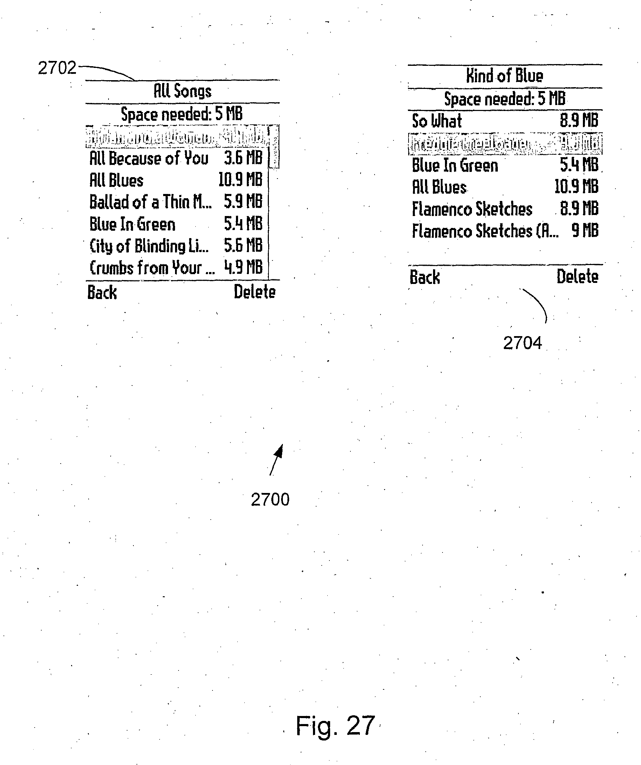

Fig. 27 shows delete songs screens 2700. The delete songs screens 2700 display the name and size of a list of tracks and allows the user to delete one or more songs from the library. When entered from the delete menu screen 2400, all the tracks are displayed (2702). Alternatively, when entered from the delete albums screen 2600, the tracks for the selected album are displayed (2704).

It should be noted that each of the display screens described herein provides a number of user activated icons whose functions are determined by the particular screen being displayed. For example, referring to Fig. 9A, in the stopped mode and the paused mode, the user activated icons include an exit icon, a soft key icon, and a play icon, whereas in the playing mode, the play icon is replaced with a pause icon. In addition, an acceleration feature whereby during a period of time in which a particular user input button, or key, having the acceleration feature is held down, the observed resulting action (such as moving a playback position forward, for example) can be accelerated in a predetermined manner. Using the example of moving the playback position, providing what is referred to as a long press input (i.e., holding a key down for a length of time greater than a predetermined threshold) to a forward hard key results in moving the playback position forward starting in pre-determined time intervals increments (such as 5 seconds) and accelerating in larger time interval increments while the playback position key is being held down. In some examples, after a period of time, the mode switches to another mode (to progress mode, for example).

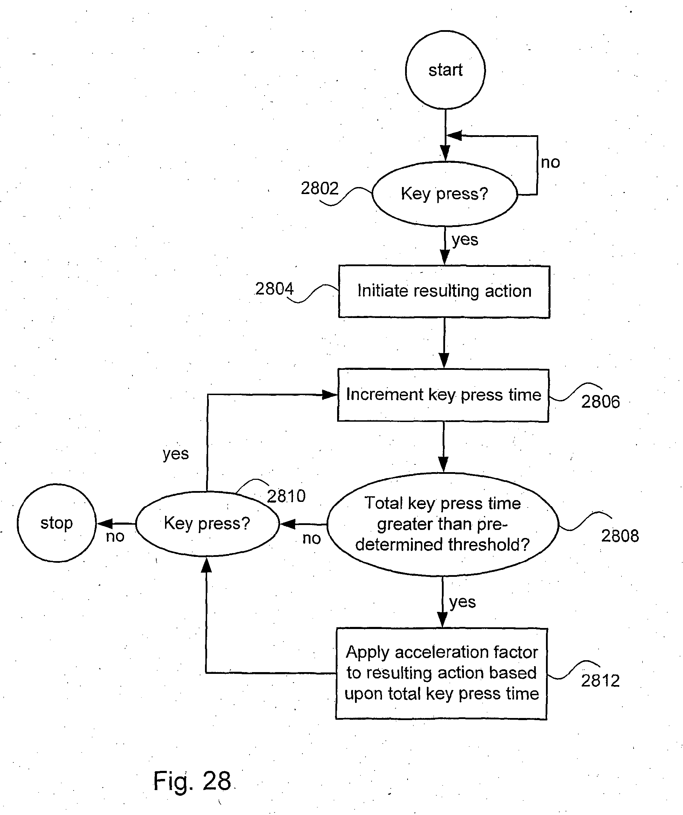

Fig. 28 illustrates a flowchart detailing a process 2800 describing an accelerated resulting action. The process 2800 begins at 2802 by determining if a key press has occurred. When a key press has occurred, then at 2804, a corresponding resulting action is initiated while at 2806 the key press time is incremented (such as 5 seconds). At 2808, the total key press time (i.e., the total length of time that the key in question has been held down) is compared to a pre-detemined threshold length of time. If the total length of key press time is less than the pre-determined threshold, then a determination is made at 2810 if the key press is still ongoing. If the key press is still ongoing, then control is passed back to 2806 where the key press time is incremented, otherwise, the process 2800 stops. On the other hand, if at 2808 it had been determined that the total key press time is greater than the pre-determined threshold length of time, then at 2812, an acceleration factor is applied to the resulting action where the applied acceleration depends upon the total key press time. The acceleration behavior that occurs while a key is held down also takes into account the relation of the current playback position to the beginning and end of the track. More specifically, as the playback position approaches the end of the track when fast-forwarding or the beginning of the track when rewinding, the rate of acceleration automatically decreases so as to allow for more precise positioning and to avoid overshooting the end or beginning of the track. In some examples, after a period of time, the mode switches to another mode (to progress mode, for example).

## Claims

1. A method of assisting a user interacting with a portable wireless communication device (100), comprising:
providing a user interface for the portable wireless communication device, the user interface including a plurality of linked display screens and a plurality of physical keys;
displaying one of the linked display screens as a current display screen;
receiving a key press corresponding to a selected physical key (108);
displaying a resulting action on a next display screen; and
determining a duration of time of the pressing of the selected physical key (108), and, if the duration of time is greater than a predetermined amount of time, then applying an acceleration adjustment to the resulting action based on the duration of time;
wherein the resulting action includes displaying a position indicator that is adjusted with the acceleration adjustment to move the position indicator at a greater rate; and
wherein the rate of acceleration is automatically decreased when the position indicator approaches an end of a track or a beginning of a track.

2. A method as recited in claim 1, further comprising; displaying a plurality of selectable icons on the current display screen.

3. A method as recited in claim 2, wherein the plurality of physical keys includes a plurality of navigation keys (108) arranged to provide a navigation signal used to navigate amongst the currently displayed icons.

4. A method as recited in claim 3, wherein the plurality of physical keys (108) includes a plurality of keypad keys arranged to provide a keypad input signal.

5. A method as recited in claim 4, wherein the personal portable wireless communication device (100) is selected from a group that includes a cell phone, a personal digital assistant (PDA), and a digital multimedia player.

6. A method as recited in claim 5, wherein the keypad input signals are suitable for initiating a communication session by the cell phone (100) that includes a memory device (122).

7. A method as recited in claim 6, further comprising:
receiving a key press at a particular keypad (108) arranged to initiate a digital data file download operation;
downloading the digital data file in response to the digital data file download key press; and
storing the digital data file in the memory device (122).

8. A method as recited in claim 7, wherein the digital data file is a digital audio file.

9. A method as recited in claim 8, wherein the downloaded digital audio file is incorporated into a library of digital audio files stored in the memory device (122).

10. A method as recited in claim 9, wherein the plurality of linked display screens includes a main menu screen that is a home screen (402) of the graphical user interface from which a user can view and interact with, at least, a selectable master playlist item (404), a selectable list of artist items (408), a selectable list of all album items, and a selectable list of song items (408) corresponding to the digital audio files stored in the memory device.

11. A method as recited in claim 10, further comprising:
receiving a user selection of the master playlist screen item (404); and
displaying a playlists screen that lists selectable items corresponding to the names of all the playlists that have been stored in the cell phone (100).

12. A method as recited in claim 11, further comprising:
receiving a user selection of one of the items of the playlist screen corresponding to a selected playlist; and
displaying a playlist screen corresponding to the selected playlist that includes a list of selectable items corresponding to the names of the songs in the current playlist in the order in which they will be played.

13. A method as recited in claim 12, wherein user can arrange the order of the songs in the playlist as desired.

14. A method as recited in claim 13, further comprising:
receiving a user selection of one of the items of the corresponding to a selected song; and
displaying a now playing screen associated with the selected song.

15. A method as recited in claim 10, further comprising:
receiving a user selection of one of the selectable artist items; and
displaying an all artists screen that lists selectable items corresponding to the names of all the artists that have been stored in the cell phone.

16. A method as recited in claim 15, further comprising:
receiving a user selection of one of the items (416) of the all artists screen (412) corresponding to a selected artist; and
displaying an artist screen corresponding to the selected artist that includes a list of selectable items corresponding to the names of the songs stored in the memory device in the order in which they will be played.

17. A method as recited in claim 16, wherein user can arrange the order of the songs in the artists screen (412) as desired.

18. A method as recited in claim 17, further comprising:
receiving a user selection of one of the items of the corresponding to a selected song; and
displaying the now playing screen associated with the selected song.

19. A method as recited in claim 10, further comprising:
receiving a user selection of one of the all albums items; and
displaying an album screen (418) that lists selectable items (422) corresponding to the names of all the albums that have been stored in the memory device (122).

20. A method as recited in claim 19, further comprising:
receiving a user selection of one of the items (422) of the albums screen (418) corresponding to a selected album; and
displaying an album screen corresponding to the selected album that includes a list of selectable items corresponding to the names of the songs in the current album in the order in which they will be played.

21. A method as recited in claim 20, wherein user can arrange the order of the tracks in the album screen (418) as desired.

22. A method as recited in claim 21, further comprising:
receiving a user selection of one of the items of the corresponding to a selected song; and
displaying the now playing screen associated with the selected song.

23. A method as recited in claim 20, further comprising:
receiving a user selection of the songs items; and
displaying a songs screen that lists selectable items corresponding to the names of all the songs that have been stored in the cell phone (100).

24. A method as recited in claim 20, further comprising:
receiving a user selection of one of the items (426) of the songs screen (424) corresponding to a selected playlist; and
displaying the now playing screen (428) associated with the selected song.

25. A method as recited in claim 1, wherein the position indicator pertains to a playback position.

26. A cell phone (100) comprising:
a display screen (110) arranged to display a plurality of selectable items;
a plurality of physical keys (108);
a processor (102) for carrying out computer program code; and
a memory device (122) for storing computer program code, the computer program code including at least:
computer program code for displaying the selectable items on the display screen (110);
computer program code for receiving a key press corresponding to a selected physical key (108);
computer program code for determining a duration of time of the pressing of the selected physical key (108);
computer program code for displaying a resulting action on the display screen (110) based upon the received key press;
computer program code for applying an acceleration adjustment to the resulting action based on the duration of time if the duration of time is greater than a predetermined amount of time;
wherein the resulting action includes displaying a position indicator that is adjusted with the acceleration adjustment to move the position indicator at a greater rate; and
computer program code for decreasing the rate of acceleration when the position indicator approaches an end of a track or a beginning of a track.

27. A cell phone (100) as recited in claim 26, further comprising computer program code for displaying a plurality of selectable icons on the current display screen.

28. A cell phone (100) as received in claim 27, wherein the plurality of physical keys (108) includes a plurality of navigation keys arrange to provide a navigation signal used to navigate amongst the currently displayed icons.

29. A cell phone (100) as recited in claim 28, wherein the plurality of physical keys (108) includes a plurality of keypad keys arranged to provide a keypad input signal.

## Patentansprüche

1. Ein Verfahren zum Unterstützen eines Benutzers, der mit einer tragbaren drahtlosen Kommunikationsvorrichtung (100) interagiert, umfassend:
Bereitstellen einer Benutzerschnittstelle für die tragbare drahtlose Kommunikationsvorrichtung, wobei die Benutzerschnittstelle eine Vielzahl von verbundenen Anzeigebildschirmen und eine Vielzahl von physischen Tasten beinhaltet;
Anzeigen eines der verlinkten Anzeigebildschirme als einen aktuellen Anzeigebildschirm;
Empfangen eines Tastendrucks, der einer ausgewählten physischen Taste (108) entspricht;
Anzeigen einer sich ergebenden Handlung auf einem nächsten Anzeigebildschirm; und
Bestimmen einer Zeitdauer des Drückens der ausgewählten physischen Taste (108), und, falls die Zeitdauer größer ist als eine vorbestimmte Zeit, dann Anwenden einer Beschleunigungsanpassung auf die sich ergebende Handlung auf der Grundlage der Zeitdauer;
wobei die sich ergebende Handlung Anzeigen eines Positionsindikators beinhaltet, der mit der Beschleunigungsanpassung angepasst ist, um den Positionsindikator mit einer größeren Rate zu bewegen; und
wobei die Beschleunigungsrate automatisch verringert wird, wenn der Positionsindikator sich einem Ende eines Musikstücks oder einem Beginn eines Musikstücks annähert.

2. Verfahren nach Anspruch 1, weiterhin umfassend: Anzeigen einer Vielzahl von auswählbaren Icons auf dem aktuellen Anzeigebildschirm.

3. Verfahren nach Anspruch 2, wobei die Vielzahl physischer Tasten eine Vielzahl von Navigationstasten (108) beinhaltet, die angeordnet sind, um ein Navigationssignal bereitzustellen, das verwendet wird, um zwischen den aktuell angezeigten Icons zu navigieren.

4. Verfahren nach Anspruch 3, wobei die Vielzahl von physischen Tasten (108) eine Vielzahl von Tastaturtasten beinhaltet, die angeordnet sind, um ein Tastatureingabesignal bereitzustellen.

5. Verfahren nach Anspruch 4, wobei die persönliche tragbare drahtlose Kommunikationsvorrichtung (100) ausgewählt ist aus einer Gruppe, die ein Handy, einen persönlichen digitalen Assistenten (PDA) und einen digitalen Multimediaplayer beinhaltet.

6. Verfahren nach Anspruch 5, wobei die Tastatureingabesignale geeignet sind zum Einleiten einer Kommunikationssitzung durch das Handy (100), das eine Speichervorrichtung (122) beinhaltet.

7. Verfahren nach Anspruch 6, weiterhin umfassend:
Empfangen eines Tastendrucks bei einer bestimmten Tastatur (108), die angeordnet ist, um eine digitale Datei-Herunterladeoperation einzuleiten;
Herunterladen der digitalen Datei in Antwort auf den Tastendruck für das Herunterladen der digitalen Datei; und
Speichern der digitalen Datei in der Speichervorrichtung (122).

8. Verfahren nach Anspruch 7, wobei die digitalen Datei eine digitale Audiodatei ist.

9. Verfahren nach Anspruch 8, wobei die heruntergeladene digitale Audiodatei aufgenommen wird in eine Bibliothek digitaler Audiodateien, die in der Speichervorrichtung (122) gespeichert sind.

10. Verfahren nach Anspruch 9, wobei die Vielzahl von verlinkten Anzeigebildschirmen einen Hauptmenübildschirm beinhaltet, der ein Home-Bildschirm (402) der grafischen Benutzerschnittstelle ist, von dem aus ein Benutzer mindestens einen auswählbare Hauptwiedergabelisteneintrag (404), eine auswählbare Liste von Künstlereinträgen (408), eine auswählbare Liste von allen Albumeinträgen, und eine auswählbare Liste von Liedeinträgen (408), die den digitalen Audiodateien entsprechen, die in der Speichervorrichtung gespeichert sind, sehen und damit interagieren kann.

11. Verfahren nach Anspruch 10, weiterhin umfassend:
Empfangen einer Benutzerauswahl des Hauptwiedergabelisten-Bildschirmeintrags (404); und
Anzeigen eines Wiedergabelisten-Bildschirms, der auswählbare Einträge auflistet, die den Namen aller Wiedergabelisten entsprechen, die in dem Handy (100) gespeichert sind.

12. Verfahren nach Anspruch 11, weiterhin umfassend:
Empfangen einer Benutzerauswahl eines der Einträge des Wiedergabelisten-Bildschirms, der einer ausgewählten Wiedergabeliste entspricht; und
Anzeigen eines Wiedergabelisten-Bildschirms, der der ausgewählten Wiedergabeliste entspricht, die eine Liste von auswählbaren Einträgen beinhaltet, die den Namen der Lieder in der aktuellen Wiedergabeliste in der Reihenfolge, in welcher sie abgespielt werden, entspricht.

13. Verfahren nach Anspruch 12, wobei ein Benutzer die Reihenfolge der Lieder in der Wiedergabeliste wie gewünscht anordnen kann.

14. Verfahren nach Anspruch 13, weiterhin umfassend:
Empfangen einer Benutzerauswahl eines der Einträge des entsprechenden ausgewählten Liedes; und
Anzeigen eines Jetzt-Abspielen-Bildschirms, der mit dem ausgewählten Lied verknüpft ist.

15. Verfahren nach Anspruch 10, weiterhin umfassend:
Empfangen einer Benutzerauswahl eines auswählbaren Künstlereintrags; und
Anzeigen eines Alle-Künstler-Bildschirms, der auswählbare Einträge auflistet, die den Namen aller Künstler entsprechen, die im Handy gespeichert worden sind.

16. Verfahren nach Anspruch 15, weiterhin umfassend:
Empfangen einer Benutzerauswahl eines der Einträge (416) des Alle-Künstler-Bildschirms (412), der einem ausgewählten Künstler entspricht; und
Anzeigen eines Künstlerbildschirms, der dem ausgewählten Künstler entspricht, der eine Liste von auswählbaren Einträgen beinhaltet, die den Namen der Lieder entsprechen, die in der Speichervorrichtung gespeichert sind, in der Reihenfolge, in welcher sie abgespielt werden.

17. Verfahren nach Anspruch 16, wobei ein Benutzer die Reihenfolge der Lieder auf dem Künstlerbildschirm (412) wie gewünscht anordnen kann.

18. Verfahren nach Anspruch 17, weiterhin umfassend:
Empfangen einer Benutzerauswahl eines der Einträge, die einem ausgewählten Lied entsprechen; und
Anzeigen des Jetzt-Abspielen-Bildschirms, der mit dem ausgewählten Lied verknüpft ist.

19. Verfahren nach Anspruch 10, weiterhin umfassend:
Empfangen einer Benutzerauswahl eines der Alle-Alben-Einträge; und
Anzeigen eines Albumbildschirms (418), der auswählbare Einträge (422) auflistet, die den Namen aller Alben entsprechen, die in der Speichervorrichtung (122) gespeichert worden sind.

20. Verfahren nach Anspruch 19, weiterhin umfassend:
Empfangen einer Benutzerauswahl eines der Einträge (422) des Albumbildschirms (418), der einem ausgewählten Album entspricht; und
Anzeigen eines Albumbildschirms, der dem ausgewählten Album entspricht, der eine Liste von auswählbaren Einträgen beinhaltet, die den Namen der Lieder in dem aktuellen Album in der Reihenfolge, in welcher sie abgespielt werden, entspricht.

21. Verfahren nach Anspruch 20, wobei ein Benutzer die Reihenfolge der Lieder auf dem Albumbildschirm (418) wie gewünscht anordnen kann.

22. Verfahren nach Anspruch 21, weiterhin umfassend:
Empfangen einer Benutzerauswahl eines der Einträge, der einem ausgewählten Lied entspricht; und
Anzeigen des Jetzt-Abspielen-Bildschirms, der mit dem ausgewählten Lied verknüpft ist.

23. Verfahren nach Anspruch 20, weiterhin umfassend:
Empfangen einer Benutzerauswahl der Liedereinträge; und
Anzeigen eines Liederbildschirms, der auswählbare Einträge auflistet, die den Namen aller Lieder entsprechen, die in dem Handy (100) gespeichert worden sind.

24. Verfahren nach Anspruch 20, weiterhin umfassend:
Empfangen einer Benutzerauswahl eines der Einträge (426) des Liederbildschirms (424), der einer ausgewählten Wiedergabeliste entspricht; und
Anzeigen des Jetzt-Abspielen-Bildschirms (428), der mit dem ausgewählten Lied verknüpft ist.

25. Verfahren nach Anspruch 1, wobei der Positionsindikator einer Wiedergabeposition entspricht.

26. Ein Handy (100), umfassend:
eine Bildschirmanzeige (110), die angeordnet ist, um eine Vielzahl von auswählbaren Einträgen anzuzeigen;
eine Vielzahl von physischen Tasten (108);
einen Prozessor (102) zum Ausführen von Computerprogrammcode; und
eine Speichervorrichtung (122) zum Speichern von Computerprogrammcode, wobei der Computerprogrammcode mindestens beinhaltet:
Computerprogrammcode zum Anzeigen der auswählbaren Einträge auf dem Anzeigebildschirm (110);
Computerprogrammcode zum Empfangen eines Tastendrucks, der einer ausgewählten physischen Taste (108) entspricht;
Computerprogrammcode zum Bestimmen einer Zeitdauer des Drückens der ausgewählten physischen Taste (108);
Computerprogrammcode zum Anzeigen einer sich ergebenden Handlung auf der Bildschirmanzeige (110) auf der Grundlage des empfangenen Tastendrucks;
Computerprogrammcode zum Anwenden einer Beschleunigungsanpassung auf die sich ergebende Handlung auf der Grundlage der Zeitdauer, wenn die Zeitdauer größer ist als eine vorbestimmte Zeit;
wobei die sich ergebende Handlung Anzeigen eines Positionsindikators beinhaltet, der mit der Beschleunigungsanpassung angepasst ist, um den Positionsindikator bei einer größeren Rate zu bewegen; und
Computerprogrammcode zum Verringern der Beschleunigungsrate, wenn der Positionsindikator sich einem Ende eines Musiksttücks oder dem Anfang eines Musikstücks annähert.

27. Handy (100) nach Anspruch 26, weiterhin umfassend Computerprogrammcode zum Anzeigen einer Vielzahl von auswählbaren Icons auf dem aktuellen Anzeigebildschirm.

28. Handy (100) nach Anspruch 27, wobei die Vielzahl von physischen Tasten (108) eine Vielzahl von Navigationstasten beinhaltet, die angeordnet sind, um ein Navigationssignal bereitzustellen, das verwendet wird, um zwischen den aktuell angezeigten Icons zu navigieren.

29. Handy (100) nach Anspruch 28, wobei die Vielzahl von physischen Tasten (108) eine Vielzahl von Tastaturtasten beinhaltet, die angeordnet sind, um ein Tastatureingabesignal bereitzustellen.

## Revendications

1. Un procédé pour assister un utilisateur interagissant avec un dispositif de communication sans fil portable (100), comprenant :
la mise à disposition d'une interface utilisateur pour le dispositif de communication sans fil portable, l'interface utilisateur comprenant une pluralité d'écrans d'affichage liés et une pluralité de touches physiques ;
l'affichage de l'un des écrans d'affichage liés en tant qu'écran d'affichage en cours ;
la réception de l'appui sur une touche correspondant à une touche physique sélectionnée (108) ;
l'affichage d'une action résultante sur un écran d'affichage suivant ; et
la détermination d'une durée temporelle de l'appui sur la touche physique sélectionnée (108) et, si la durée temporelle est supérieure à une quantité temporelle prédéterminée, alors l'application d'un ajustement d'accélération à l'action résultante en fonction de la durée temporelle ;
dans lequel l'action résultante comprend l'affichage d'un indicateur de position qui est ajusté avec l'ajustement de l'accélération pour déplacer l'indicateur de position à une plus grande vitesse ; et
dans lequel le taux d'accélération est automatiquement réduit lorsque l'indicateur de position approche d'une extrémité d'une piste ou d'un début d'une piste.

2. Un procédé selon la revendication 1, comprenant en outre l'affichage d'une pluralité d'icônes sélectionnables sur l'écran d'affichage en cours.

3. Un procédé selon la revendication 2, dans lequel la pluralité de touches physiques comprend une pluralité de touches de navigation (108) configurées pour produire un signal de navigation utilisé pour naviguer parmi les icônes en cours affichées.

4. Un procédé selon la revendication 3, dans lequel la pluralité de touches physiques (108) comprend une pluralité de touches de clavier configurées pour produire un signal d'entrée de clavier.

5. Un procédé selon la revendication 4, dans lequel le dispositif de communication sans fil portable personnel (100) est choisi dans un groupe qui comprend un téléphone cellulaire, un assistant numérique personnel (PDA) et un lecteur multimedia numérique.

6. Un procédé selon la revendication 5, dans lequel les signaux d'entrée de clavier sont propres à lancer une session de communication par le téléphone cellulaire (100) qui inclut un dispositif de mémoire (122).

7. Un procédé selon la revendication 6, comprenant en outre :
la réception d'un appui de touche sur un clavier particulier (108) configuré pour initier une opération de téléchargement de fichier de données numériques ;
le téléchargement du fichier de données numériques en réponse à l'appui sur la touche de téléchargement du fichier de données numériques ; et
la mémorisation du fichier de données numériques dans le dispositif de mémoire (122).

8. Un procédé selon la revendication 7, dans lequel le fichier de données numériques est un fichier audio numérique.

9. Un procédé selon la revendication 8, dans lequel le fichier audio numérique téléchargé est incorporé dans une bibliothèque de fichiers audio numériques mémorisés dans le dispositif de mémoire (122).

10. Un procédé selon la revendication 9, dans lequel la pluralité d'écrans d'affichage liés comprend un écran de menu principal qui est un écran d'accueil (402) de l'interface utilisateur graphique à partir duquel un utilisateur peut visualiser et interagir avec, au moins, un article sélectionnable de liste de diffusion maitresse (404), une liste sélectionnable d'articles d'artistes (408), une liste sélectionnable de tous les articles d'albums, et une liste sélectionnable de rubriques de chansons (408) correspondant aux fichiers audio numériques mémorisés dans le dispositif de mémoire.

11. Un procédé selon la revendication 10, comprenant en outre :
la réception d'une sélection utilisateur de l'article d'écran de liste de diffusion maitresse (404) ; et
l'affichage d'un écran de listes de diffusion qui liste des rubriques sélectionnables correspondant aux noms de toutes les listes de diffusion qui ont été mémorisées dans le téléphone cellulaire (100).

12. Un procédé selon la revendication 11, comprenant en outre :
la réception d'une sélection utilisateur de l'un des articles de l'écran de liste de diffusion correspondant à une liste de diffusion sélectionnée ; et
l'affichage d'un écran de liste de diffusion correspondant à la liste de diffusion sélectionnée qui comprend une liste de rubriques sélectionnables correspondant aux noms des chansons de la liste de diffusion en cours dans l'ordre auquel elles seront lues.

13. Un procédé selon la revendication 12, dans lequel l'utilisateur peut configurer l'ordre des chansons dans la liste de diffusion comme il le souhaite.

14. Un procédé selon la revendication 13, comprenant en outre :
la réception d'une sélection utilisateur de l'un des articles correspondant à une chanson sélectionnée ; et
l'affichage d'un écran d'en-cours de lecture associé à la chanson sélectionnée.

15. Un procédé selon la revendication 10, comprenant en outre :
la réception d'une sélection utilisateur de l'un des articles d'artistes sélectionnables ; et
l'affichage d'un écran de tous les artistes qui liste les rubriques sélectionnables correspondant aux noms de tous les articles qui ont été mémorisés dans le téléphone cellulaire.

16. Un procédé selon la revendication 15, comprenant en outre :
la réception d'une sélection utilisateur de l'un des articles (416) de l'écran de tous les artistes (412) correspondant à un article sélectionné ; et
l'affichage d'un écran d'artiste correspondant à l'artiste sélectionné qui inclut une liste de rubriques sélectionnables correspondant aux noms des chansons mémorisées dans le dispositif de mémoire dans l'ordre suivant lequel elles seront lues.

17. Un procédé selon la revendication 16, dans lequel l'utilisateur peut configurer l'ordre des chansons dans l'écran d'artiste (412) comme il le souhaite.

18. Un procédé selon la revendication 17, comprenant en outre :
la réception d'une sélection utilisateur de l'un des articles correspondant à une chanson sélectionnée ; et
l'affichage de l'écran d'en-cours de lecture associé à la chanson sélectionnée.

19. Un procédé selon la revendication 10, comprenant en outre :
la réception d'une sélection utilisateur de l'un des articles de tous les albums ; et
l'affichage d'un écran d'album (418) qui liste les rubriques sélectionnables (422) correspondant aux noms de tous les albums qui ont été mémorisés dans le dispositif mémoire (122).

20. Un procédé selon la revendication 19, comprenant en outre :
la réception d'une sélection utilisateur de l'un des articles (422) de l'écran d'album (418) correspondant à un album sélectionné ; et
l'affichage d'un écran d'album correspondant à l'album sélectionné qui inclut une liste de rubriques sélectionnables correspondant aux noms des chansons dans l'album en cours dans l'ordre suivant lequel elles seront lues.

21. Un procédé selon la revendication 20, dans lequel l'utilisateur peut configurer l'ordre des pistes dans l'écran d'album (418) comme il le souhaite.

22. Un procédé selon la revendication 21, comprenant en outre :
la réception d'une sélection utilisateur de l'une des rubriques correspondant à une chanson sélectionnée ; et
l'affichage de l'écran d'en-cours de lecture associé à la chanson sélectionnée.

23. Un procédé selon la revendication 20, comprenant en outre :
la réception d'une sélection utilisateur de rubriques de chansons ; et
l'affichage d'un écran de chanson qui liste les rubriques sélectionnables correspondant aux noms de toutes les chansons qui ont été mémorisées dans le téléphone cellulaire (100).

24. Un procédé selon la revendication 20, comprenant en outre :
la réception d'une sélection utilisateur de l'une des rubriques (426) de l'écran de chanson (424) correspondant à une liste de lecture sélectionnée ; et
l'affichage de l'écran d'en-cours de lecture (428) associé à la chanson sélectionnée.

25. Un procédé selon la revendication 1, dans lequel l'indicateur de position a trait à une position de reproduction.

26. Un téléphone cellulaire (100) comprenant :
un écran d'affichage (110) configuré pour afficher une pluralité de rubriques sélectionnables ;
une pluralité de touches physiques (108) ;
un processeur (102) pour mettre en oeuvre du code de programme informatique ; et
un dispositif de mémoire (122) pour mémoriser du code de programme informatique, le code de programme informatique comprenant au moines :
du code de programme informatique pour l'affichage sur l'écran d'affichage (110) des rubriques sélectionnables ;
du code de programme informatique pour recevoir un appui de touche correspondant à une touche physique sélectionnée (108) ;
du code de programme informatique pour déterminer une durée temporelle de l'appui sur la touche physique sélectionnée (108) ;
du code de programme informatique pour afficher une action résultante sur l'écran d'affichage (110) en fonction de l'appui de touche reçu ;
du code de programme informatique pour l'application d'un ajustement d'accélération à l'action résultante en fonction de la durée temporelle si la durée temporelle est supérieure à une quantité de temps prédéterminée ;
dans lequel l'action résultante comprend l'affichage d'un indicateur de position qui est ajusté avec l'ajustement d'accélération pour déplacer l'indicateur de position à une vitesse plus grande ; et
du code de programme informatique pour réduire le taux d'accélération lorsque l'indicateur de position s'approche d'une extrémité d'une piste ou du début d'une piste.

27. Un téléphone cellulaire (100) selon la revendication 26, comprenant en outre du code de programme informatique pour l'affichage sur l'écran d'affichage en cours d'une pluralité d'icônes sélectionnables.

28. Un téléphone cellulaire (100) selon la revendication 27, dans lequel la pluralité de touches physiques (108) comprend une pluralité de touches de navigation configurées pour produire un signal de navigation utilisé pour naviguer parmi les icônes en cours d'affichage.

29. Un téléphone cellulaire (100) selon la revendication 28, dans lequel la pluralité de touches physiques (108) comprend une pluralité de touches de clavier configurées pour produire un signal d'entrée de clavier.
